(19) Europäisches Patentamt
European Patent Office
Office européen des brevets

(11) **EP 4 768 271 A1**

(12) **EUROPEAN PATENT APPLICATION**

(43) Date of publication:
**01.07.2026 Bulletin 2026/27**

(21) Application number: **25219123.4**

(22) Date of filing: **27.11.2025**

(51) International Patent Classification (IPC):
***B60C 1/00** (2006.01)* ***C08L 15/00** (2006.01)*

(52) Cooperative Patent Classification (CPC):
(C-Sets available)
**C08L 15/00; B60C 1/0016** (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **27.12.2024 JP 2024231934**

(71) Applicant: **Sumitomo Rubber Industries, Ltd.
Kobe-shi, Hyogo 651-0072 (JP)**

(72) Inventors:
- **TOMISAKI, Yukari
Kobe-shi, 651-0072 (JP)**
- **YASUDA, Rie
Kobe-shi, 651-0072 (JP)**

(74) Representative: **Manitz Finsterwald
Patent- und Rechtsanwaltspartnerschaft mbB
Martin-Greif-Straße 1
80336 München (DE)**

# (54) TIRE

(57) Provided is a tire with excellent wet grip performance. The tire includes a tread including a rubber composition, the tread having a circumferential groove, the rubber composition containing a rubber component including a rubber having an amino group; a filler including silica; and an ionic bonding coupling agent, the tire satisfying the relationship: $D \times S > 300$
wherein D represents a maximum depth (mm) of the circumferential groove, and S represents an amount (parts by mass) of the silica per 100 parts by mass of the rubber component.

EP 4 768 271 A1

(52) Cooperative Patent Classification (CPC): (Cont.)

C-Sets
**C08L 15/00, C08L 9/00, C08L 7/00, C08L 9/00, C08L 91/00, C08L 91/06, C08L 45/00, C08K 3/04, C08K 3/36, C08K 5/5445, C08K 5/548, C08K 5/18, C08K 5/09, C08K 3/22, C08K 3/06, C08K 5/31, C08K 5/47;**
**C08L 15/00, C08L 9/00, C08L 9/00, C08L 7/00, C08L 91/00, C08L 91/06, C08L 45/00, C08K 3/04, C08K 3/36, C08K 5/5445, C08K 5/548, C08K 5/18, C08K 5/09, C08K 3/22, C08K 3/06, C08K 5/31, C08K 5/47;**
**C08L 15/00, C08L 9/00, C08L 9/00, C08L 91/00, C08L 7/00, C08L 91/06, C08L 45/00, C08K 3/04, C08K 3/36, C08K 5/5445, C08K 5/548, C08K 5/18, C08K 5/09, C08K 3/22, C08K 3/06, C08K 5/31, C08K 5/47;**
**C08L 15/00, C08L 9/00, C08L 91/00, C08L 7/00, C08L 91/06, C08L 45/00, C08K 3/04, C08K 3/36, C08K 5/5445, C08K 5/548, C08K 5/18, C08K 5/09, C08K 3/22, C08K 3/06, C08K 5/31, C08K 5/47;**
**C08L 15/00, C08L 91/00, C08L 9/00, C08L 7/00, C08L 91/06, C08L 45/00, C08K 3/04, C08K 3/36, C08K 5/5445, C08K 5/548, C08K 5/18, C08K 5/09, C08K 3/22, C08K 3/06, C08K 5/31, C08K 5/47**

## Description

TECHNICAL FIELD

The present invention relates to tires.

BACKGROUND ART

Various techniques have recently been studied to improve the grip performance of tires (see, for example, Patent Literature 1). Yet, further improvement of grip performance is desired.

CITATION LIST

- Patent Literature

Patent Literature 1: JP 2013-544936 T

SUMMARY OF INVENTION

- Technical Problem

The present invention aims to solve the above problem and provide a tire with excellent wet grip performance.

- Solution to Problem

The present invention relates to a tire, including a tread including a rubber composition, the tread having a circumferential groove, the rubber composition containing a rubber component including a rubber having an amino group; a filler including silica; and an ionic bonding coupling agent, the tire satisfying the relationship:

$$D \times S > 300$$

wherein D represents a maximum depth (mm) of the circumferential groove, and S represents an amount (parts by mass) of the silica per 100 parts by mass of the rubber component.

- Advantageous Effects of Invention

The tire of the present invention includes a tread including a rubber composition, the tread having a circumferential groove, the rubber composition containing a rubber component including a rubber having an amino group; a filler including silica; and an ionic bonding coupling agent, the tire satisfying the relationship:

$$D \times S > 300$$

wherein D represents a maximum depth (mm) of the circumferential groove, and S represents an amount (parts by mass) of the silica per 100 parts by mass of the rubber component. Thus, the present invention can provide tires with excellent wet grip performance.

BRIEF DESCRIPTION OF DRAWINGS

FIG. 1 shows a meridional cross-sectional view of a part of a pneumatic tire according to an embodiment of the present invention.
FIG. 2 shows a cross-sectional view of a tread of a tire cut along a plane including the tire axis.

DESCRIPTION OF EMBODIMENTS

The present invention relates to a tire, including a tread including a rubber composition, the tread having a

circumferential groove, the rubber composition containing a rubber component including a rubber having an amino group; a filler including silica; and an ionic bonding coupling agent, the tire satisfying the relationship:

$$D \times S > 300$$

wherein D represents a maximum depth (mm) of the circumferential groove, and S represents an amount (parts by mass) of the silica per 100 parts by mass of the rubber component.

The reason for the above-described advantageous effect is not exactly clear, but it is believed to be due to the following mechanism.

A circumferential groove with a large maximum depth can drain the water between a wet road surface and the tire well, thereby reducing the occurrence of hydroplaning.

A larger amount of silica better improves the grip performance of the tire.

The tire can obtain good wet grip performance by satisfying the relationship: $D \times S > 300$; in other words, the amount of the silica is increased when the circumferential groove has a small maximum depth, while the maximum depth of the circumferential groove is increased when the amount of the silica is small.

When the tire comes into contact with water, due to the presence of the ionic bonding coupling agent, bonds (mainly ionic bonds derived from the ionic bonding coupling agent) other than covalent bonds break. Thus, the tire can obtain good wet grip performance.

The wet grip performance can be improved presumably for the above reasons.

The tire solves the problem (aim) in improving wet grip performance because of its structure described above. Specifically, the tire includes a tread including a rubber composition, the tread having a circumferential groove, the rubber composition containing a rubber component including a rubber having an amino group; a filler including silica; and an ionic bonding coupling agent, and the tire satisfies the relationship: $D \times S > 300$ wherein D represents a maximum depth (mm) of the circumferential groove, and S represents the amount of the silica.

In other words, the parameter of the relationship: $D \times S > 300$ does not define the problem (aim). The problem herein is to improve wet grip performance. In order to solve the problem, the tire has been formulated to satisfy the parameter.

An embodiment of the present invention will be described based on the drawings. The embodiment is merely an exemplary embodiment, and the tire of the present invention is not limited to the following embodiment.

Herein, the term "rubber component" refers to a component that contributes to crosslinking. A rubber that is solid under conditions of 1 atmosphere and 25°C (solid rubber) corresponds to "rubber component". In other words, a rubber that is liquid under conditions of 1 atmosphere and 25°C (liquid rubber) does not correspond to "rubber component".

Here, the rubber component is preferably a polymer having a weight average molecular weight (Mw) of 50000 or more.

The weight average molecular weight of each rubber component is preferably 100000 or more, more preferably 150000 or more, still more preferably 200000 or more, while it is preferably 2000000 or less, more preferably 1500000 or less, still more preferably 1000000 or less. When the weight average molecular weight is within the range indicated above, the advantageous effects tend to be better achieved.

Herein, the weight average molecular weight (Mw) and the number average molecular weight (Mn) can be determined by gel permeation chromatography (GPC) (GPC-8000 series available from Tosoh Corporation, detector: differential refractometer, column: TSKgel SuperMultipore HZ-M available from Tosoh Corporation) and the determined values are calibrated with polystyrene standards.

The total styrene content of the rubber component is preferably 5% by mass or higher, more preferably 10% by mass or higher, still more preferably 15% by mass or higher, further preferably 19.25% by mass or higher, while it is preferably 40% by mass or lower, more preferably 30% by mass or lower, still more preferably 20% by mass or lower. When the total styrene content is within the range indicated above, the advantageous effects tend to be better achieved.

Here, the total styrene content of the rubber component refers to the total amount (unit: % by mass) of the styrene moieties in the rubber component as a whole and can be calculated by $\Sigma$[(Amount of each rubber component) $\times$ (Styrene content of the each rubber component)/100]. For example, when 100% by mass of rubber components include 85% by mass of styrene-butadiene rubber having a styrene content of 40% by mass, 5% by mass of styrene-butadiene rubber having a styrene content of 25% by mass, and 10% by mass of polybutadiene rubber having a styrene content of 0% by mass, the total styrene content is 35.25% by mass ($= 85 \times 40/100 + 5 \times 25/100 + 10 \times 0/100$).

Herein, the styrene content of each rubber component can be determined by pyrolysis gas chromatography or NMR analysis ($^1$H-NMR or $^{13}$C-NMR). This also applies to the styrene content of the SBR and the vinyl content of the SBR described below. Unlike physical properties such as complex modulus of elasticity (E*), the amounts of components have true values that do not depend on the measurement method and therefore they are preferably measured by methods with the highest possible accuracy.

Herein, in Examples, the total styrene content or the like of the rubber component is calculated using an

expression described herein. Yet, the total styrene content may be determined by analyzing the tire using Py-GC/MS or other techniques.

The rubber component preferably includes styrene-butadiene rubber (SBR).

The SBR is not limited. Examples of the SBR include emulsion-polymerized styrene-butadiene rubbers (E-SBR) and solution-polymerized styrene-butadiene rubbers (S-SBR). Each of these may be used alone, or two or more of these may be used in combination.

The SBR has a glass transition temperature (Tg) of preferably 0°C or lower, more preferably -20°C or lower, still more preferably -24°C or lower. The lower limit of the Tg of the SBR is not limited and may be -90°C or higher, -70°C or higher, or - 30°C or higher. When the Tg is within the range indicated above, the advantageous effects tend to be better achieved.

Herein, the glass transition temperature is measured by differential scanning calorimetry (DSC) at a temperature increase rate of 10°C/min in accordance with JIS K 7121. When multiple types of SBR are used, the glass transition temperature of the SBR refers to a weight average value calculated from the grass transition temperatures and the proportions of the multiple types of SBR. For example, when 100 parts by mass of the rubber component includes 40% by mass of SBR having a Tg of -80°C and 40% by mass of SBR having a Tg of -40°C, the glass transition temperature of the SBR in the rubber composition is -60°C (= ((-80 × 40) + (-40 × 40))/(40 + 40)).

The styrene content of the SBR is preferably 5% by mass or higher, more preferably 15% by mass or higher, still more preferably 25% by mass or higher, further preferably 27.5% by mass or higher, while it is preferably 50% by mass or lower, more preferably 40% by mass or lower, still more preferably 30% by mass or lower. When the styrene content is within the range indicated above, the advantageous effects tend to be better achieved.

When one type of SBR is used, the styrene content of the SBR refers to the styrene content of the one SBR, while when multiple types of SBR are used, it refers to the average styrene content.

The average styrene content of SBR can be calculated using the expression: {Σ(amount of each SBR × styrene content of the each SBR)}/amount of total SBR. For example, when 100% by mass of rubber components include 85% by mass of SBR having a styrene content of 40% by mass and 5% by mass of SBR having a styrene content of 25% by mass, the average styrene content of the SBR is 39.2% by mass (= (85 × 40 + 5 × 25)/(85 + 5)).

The vinyl content of the SBR is preferably 35% by mass or higher, more preferably 45% by mass or higher, still more preferably 55% by mass or higher, while it is preferably 80% by mass or lower, more preferably 70% by mass or lower, still more preferably 60% by mass or lower. When the vinyl content is within the range indicated above, the advantageous effects tend to be better achieved.

The vinyl content (1,2-butadiene unit content) of the SBR refers to the percentage (unit: % by mass) of vinyl bonds based on the total mass of the butadiene moieties in the SBR taken as 100. The sum of the vinyl content (% by mass), the cis content (% by mass), and the trans content (% by mass) equals 100 (% by mass). When one type of SBR is used, the vinyl content of the SBR refers to the vinyl content of the one SBR, while when multiple types of SBR are used, it refers to the average vinyl content.

The average vinyl content of SBR can be calculated using the expression: Σ{amount of each SBR × (100 (% by mass) - styrene content (% by mass) of the each SBR) × vinyl content (% by mass) of the each SBR}/Σ{amount of each SBR × (100 (% by mass) - styrene content (% by mass) of the each SBR)}. For example, when 100 parts by mass of rubber components include 75 parts by mass of SBR having a styrene content of 40% by mass and a vinyl content of 30% by mass, 15 parts by mass of SBR having a styrene content of 25% by mass and a vinyl content of 20% by mass, and the remaining 10 parts by mass of rubber components other than SBR, the average vinyl content of the SBR is 28% by mass (= {75 × (100 (% by mass) - 40 (% by mass)) × 30 (% by mass) + 15 × (100 (% by mass) - 25 (% by mass)) × 20 (% by mass)}/{75 × (100 (% by mass) - 40 (% by mass)) + 15 × (100 (% by mass) - 25 (% by mass))}.

Hydrogenated styrene-butadiene copolymers (hydrogenated SBR) are also usable as the SBR.

The SBR may be a SBR product manufactured or sold by Sumitomo Chemical Co., Ltd., JSR Corporation, Asahi Kasei Corporation, Zeon Corporation, or other manufacturers or may be SBR synthesized by a known method.

The amount of SBR, if present, in the rubber component based on 100% by mass of the rubber component is preferably 20% by mass or more, more preferably 40% by mass or more, still more preferably 60% by mass or more, further preferably 70% by mass or more, while it is preferably 90% by mass or less, more preferably 80% by mass or less, still more preferably 75% by mass or less. When the amount is within the range indicated above, the advantageous effects tend to be better achieved.

In view of abrasion resistance, the amount is preferably 70% by mass or less.

The rubber component preferably includes polybutadiene rubber (BR).

Non-limiting examples of the BR include high-cis BR having a high cis content, BR containing syndiotactic polybutadiene crystals, and BR synthesized using rare earth catalysts (rare earth-catalyzed BR). Each of these may be used alone, or two or more of these may be used in combination.

In particular, BR preferably includes high-cis BR having a cis content of 90% by mass or higher. The cis content is more preferably 95% by mass or higher, still more preferably 97% by mass or higher. Here, the cis content can be

measured by infrared absorption spectrometry.

When one type of BR is used, the cis content of the BR refers to the cis content of the one BR, while when multiple types of BR are used, it refers to the average cis content.

The average cis content of BR can be calculated using the expression: {Σ(amount of each BR × cis content of the each BR)}/amount of total BR. For example, when 100% by mass of rubber components include 20% by mass of BR having a cis content of 90% by mass and 10% by mass of BR having a cis content of 40% by mass, the average cis content of the BR is 73.3% by mass (= (20 × 90 + 10 × 40)/(20 + 10)).

Hydrogenated polybutadiene polymers (hydrogenated BR) are also usable as the BR.

Examples of usable BR include products available from UBE Corporation, JSR Corporation, Asahi Kasei Corp., Zeon Corporation, and other manufacturers.

The amount of BR, if present, in the rubber component based on 100% by mass of the rubber component is preferably 5% by mass or more, more preferably 15% by mass or more, still more preferably 20% by mass or more, while it is preferably 40% by mass or less, more preferably 30% by mass or less, still more preferably 25% by mass or less. When the amount is within the range indicated above, the advantageous effects tend to be better achieved.

In view of abrasion resistance, the amount is preferably 20% by mass or less.

The rubber component preferably includes an isoprene-based rubber.

Examples of the isoprene-based rubber include natural rubbers (NR), polyisoprene rubbers (IR), refined NR, modified NR, and modified IR. Examples of NR include those commonly used in the rubber industry such as SIR20, RSS♯3, and TSR20. Any IR may be used, including those commonly used in the rubber industry such as IR2200. Examples of refined NR include deproteinized natural rubbers (DPNR) and highly purified natural rubbers. Examples of modified NR include epoxidized natural rubbers (ENR), hydrogenated natural rubbers (HNR), and grafted natural rubbers. Examples of modified IR include epoxidized polyisoprene rubbers, hydrogenated polyisoprene rubbers, and grafted polyisoprene rubbers. Each of these may be used alone, or two or more of these may be used in combination.

The amount of an isoprene-based rubber, if present, in the rubber component based on 100% by mass of the rubber component is preferably 3% by mass or more, more preferably 6% by mass or more, still more preferably 10% by mass or more, while it is preferably 30% by mass or less, more preferably 20% by mass or less, still more preferably 15% by mass or less. When the amount is within the range indicated above, the advantageous effects tend to be better achieved.

In view of abrasion resistance, the amount is preferably 10% by mass or less.

The raw materials (monomers) of synthetic rubbers such as IR, SBR, and BR may be derived from underground resources such as petroleum or natural gas or may be recycled from rubber products such as tires or non-rubber products such as polystyrene. Non-limiting examples of monomers obtained by recycle (recycled monomers) include polyisoprene derived from recycled materials, butadiene derived from recycled materials, and aromatic vinyls derived from recycled materials. Examples of the butadiene include 1,2-butadiene and 1,3-butadiene. Non-limiting examples of the aromatic vinyls include styrene. Of these, polyisoprene derived from recycled materials (recycled isoprene), butadiene derived from recycled materials (recycled butadiene), and/or styrene derived from recycled materials (recycled styrene) are/is preferably used as raw materials.

The recycled monomers may be produced by any method. For example, a recycled monomer may be synthesized from naphtha derived from a recycled material that is obtained by decomposing a rubber product such as a tire. The naphtha derived from a recycled material may be produced by any method, for example, by decomposing a rubber product such as a tire at a high temperature and a high pressure, by microwave decomposition, or by mechanical grinding and subsequent extraction.

Further, the raw materials (monomers) of synthetic rubbers such as IR, SBR, and BR may be derived from biomass. Herein, the term "biomass" refers to substances derived from natural resources such as plants. Non-limiting examples of the biomass include agricultural, forestry and marine products, sugar, wood chips, plant residues after collecting useful components, plant-derived ethanol, and biomass naphtha.

Non-limiting examples of biomass-derived monomers (biomass monomers) include biomass-derived butadiene and biomass-derived aromatic vinyls. Examples of the butadiene include 1,2-butadiene and 1,3-bitadiene. Non-limiting examples of the aromatic vinyls include styrene. Biomass monomers may be produced by any method, for example, a method including at least one of biological conversion, chemical conversion, or physical conversion of an animal or a plant. The biological conversion is typically fermentation by microorganisms. The chemical and/or physical conversion can be caused by, for example, a catalyst, a high temperature, a high pressure, electromagnetic waves, a critical liquid, or a combination of these.

Non-limiting examples of polymers (biomass polymers) synthesized using a biomass monomer component include polybutadiene rubbers synthesized using biomass-derived butadiene and aromatic vinyl-butadiene copolymers synthesized using biomass-derived butadiene and/or biomass-derived aromatic vinyl. Examples of the aromatic vinyl-butadiene copolymers include styrene-butadiene rubber synthesized using biomass-derived butadiene and/or biomass-derived styrene.

Whether the raw material of a polymer is derived from biomass can be judged by the percent Modern Carbon

(pMC) measured in accordance with ASTM D6866-10.

The term "pMC" refers to the ratio of the $^{14}C$ content of a sample to the $^{14}C$ content of a modern carbon standard (modern standard reference). This value is used as an index indicative of the biomass ratio of a compound. The following will describe what this value means.

One mole of carbon atoms ($6.02 \times 10^{23}$ carbon atoms) includes about $6.02 \times 10^{11}$ $^{14}C$ atoms (about one trillionth of the number of normal carbon atoms). $^{14}C$ is called a radioactive isotope and its half-life period is 5730 years and the number thereof regularly decreases. Decay of all the $^{14}C$ atoms requires 226000 years. This means that in the fossil fuels, such as coal, petroleum, and natural gas, which are considered to be left for at least 226000 years after carbon dioxide and the like in the air were taken into and fixed in plants, or the like, all the $^{14}C$ atoms which had been contained in the plants or the like at the beginning of the fixation were decayed. Therefore, in the current 21st century, the fossil fuels, such as coal, petroleum, and natural gas, contain no $^{14}C$ atoms. Thus, chemical materials prepared from such fossil fuel raw materials contain no $^{14}C$ atoms either.

Meanwhile, $^{14}C$ is unceasingly generated by nuclear reaction of cosmic rays in the air, and this generation balances with the $^{14}C$ reduction due to radioactive decay. Thus, in the global atmosphere, the amount of $^{14}C$ is constant. Then, the $^{14}C$ content of materials derived from biomass resources which are circulating in the current environment is about $1 \times 10^{-12}$ mol% of the total of C atoms as described above. Therefore, a difference in the values can be used to calculate the biomass ratio of a compound.

The amount of $^{14}C$ is generally determined as follows. $^{13}C$ content ($^{13}C/^{12}C$) and $^{14}C$ content ($^{14}C/^{12}C$) are determined by tandem accelerator-based mass spectrometry. In the determination, the $^{14}C$ content of the natural carbon cycle at 1950 is used as a modern standard reference, that is, a standard $^{14}C$ content. The particular standard substance used is an oxalic acid standard offered by the National Institute of Standards and Technology (NIST), United States. The specific radioactivity of carbon (intensity of radioactivity of $^{14}C$ per gram of carbon) in the oxalic acid is corrected for carbon isotopic fractionation to a certain value for $^{13}C$, and is then corrected for decay between 1950 AD and the measurement date. This corrected value is taken as the standard $^{14}C$ content (100%). The ratio between this value and the actual measurement value of a sample is defined as pMC.

Thus, a rubber 100% produced from materials derived from biomass currently often fails to exhibit a value of 100 in a usual state and is thus expected to show roughly about 110 pMC, though there are some differences such as regional differences. On the other hand, the measured $^{14}C$ content of a chemical substance derived from a fossil fuel, such as petroleum, is expected to be about 0 pMC (for example, 0.3 pMC). This value corresponds to a biomass ratio of 0% mentioned above.

Based on the above discussion, materials such as rubber with a high pMC i.e., materials such as rubber with a high biomass ratio can suitably be used in rubber compositions for environmental protection.

The rubber composition may contain, as rubber components, different rubber components other than isoprene-based rubbers, BR, and SBR. Examples of usable different rubber components include diene-based rubbers other than the above-described rubbers. Examples of the diene-based rubbers other than isoprene-based rubbers, BR, and SBR include styrene-isoprene-butadiene rubber (SIBR), ethylene-propylene-diene rubber (EPDM), chloroprene rubber (CR), and acrylonitrile-butadiene rubber (NBR). Examples also include butyl-based rubbers and fluororubbers. Each of these rubber components may be used alone, or two or more of these may be used in combination. Modified or hydrogenated products of these rubber components are also usable. Rubbers extended with oils, resins, liquid rubber components, or the like are usable as well.

The rubber composition contains a rubber having an amino group as a rubber component.

Herein, the rubber having an amino group is solid under conditions of 1 atmosphere and 25°C.

With regard to the rubber having an amino group, the phrase "having an amino group" indicates that an amino group-derived functional group is present in the molecule of a diene-based rubber.

Examples of the rubber having an amino group include a chain end-modified rubber obtained by modifying at least one chain end of a rubber with a compound (modifier) having the amino group; a backbone-modified rubber having the amino group in the backbone; a backbone- and chain end-modified rubber having the amino group in both the backbone and a chain end (e.g., a backbone- and chain end-modified rubber in which the backbone has the amino group and at least one chain end is modified with the modifier); and a modified rubber into which two or more amino groups have been introduced.

The amino group may be any of a primary amino group ($-NH_2$), a secondary amino group (-NHR), or a tertiary amino group (-NRR').

The R and R' each represent a monovalent hydrocarbon group which may be substituted and may be linear, branched, or cyclic. The R and R' each may be either a saturated hydrocarbon group or an unsaturated hydrocarbon group and may have a heteroatom such as an oxygen atom.

The carbon number of the R or R' is preferably 1 to 10, more preferably 1 to 8, still more preferably 1 to 6.

Examples of the R or R' include hydrocarbon groups, such as aliphatic, alicyclic, and aromatic hydrocarbons, which may contain a heteroatom and may be substituted. Specific examples include linear alkyl groups, branched alkyl

groups, cyclic alkyl groups, aryl groups, and aralkyl groups, all of which may contain a heteroatom and may be substituted.

In the case where the R or R' is a linear or branched alkyl group which may contain a heteroatom and may be substituted, the carbon number thereof is preferably 1 to 8, more preferably 1 to 4, still more preferably 1 or 2. In the case where the R or R' is a cyclic alkyl group which may contain a heteroatom and may be substituted, the carbon number thereof is preferably 3 to 12. In the case where the R or R' is an aryl group which may contain a heteroatom and may be substituted, the carbon number thereof is preferably 6 to 10. In the case where the R or R' is an aralkyl group which may contain a heteroatom and may be substituted, the carbon number thereof is preferably 7 to 10.

Examples of the linear or branched alkyl group include a methyl group, an ethyl group, an n-propyl group, an isopropyl group, an n-butyl group, an iso-butyl group, a sec-butyl group, a tert-butyl group, a pentyl group, a hexyl group, a heptyl group, a 2-ethylhexyl group, an octyl group, a nonyl group, and a decyl group.

Examples of the cyclic alkyl group include a cyclopropyl group, a cyclobutyl group, a cyclopentyl group, a cyclohexyl group, a cycloheptyl group, a cyclooctyl group, an adamantyl group, a 1-ethylcyclopentyl group, and a 1-ethylcyclohexyl group.

Examples of the aryl group include a phenyl group, a tolyl group, a xylyl group, a biphenyl group, a naphthyl group, an anthryl group, and a phenanthryl group.

Examples of the aralkyl group include a benzyl group and a phenethyl group.

Examples of the backbone of the rubber having an amino group include diene-based rubbers such as the isoprene-based rubber, BR, SBR, SIBR, EPDM, CR, and NBR. To better achieve the advantageous effects, BR and SBR are preferred, with SBR being more preferred.

The amount of the rubber having an amino group based on 100% by mass of the rubber component in the rubber composition is preferably 20% by mass or more, more preferably 40% by mass or more, still more preferably 60% by mass or more, further preferably 70% by mass or more, while it is preferably 90% by mass or less, more preferably 80% by mass or less, still more preferably 75% by mass or less. When the amount is within the range indicated above, the advantageous effects tend to be better achieved.

In view of abrasion resistance, the amount is preferably 70% by mass or less.

The rubber composition contains silica as a filler.

Non-limiting examples of silica usable in the rubber composition include silica usually used in the tire industry, such as silica (anhydrous silica) prepared by a dry process and silica (hydrous silica) prepared by a wet process. The raw material of the silica is not limited and may be a raw material derived from minerals such as quartz or a raw material derived from a biological resource such as husks (for example, silica made from a biomass material such as husks as a raw material). The silica may be silica recycled from a silica-containing product. Preferred among these is hydrous silica prepared by a wet process because it has a large number of silanol groups and has a large number of reaction sites with silane coupling agents. The silica may be used alone or two or more types thereof may be used in combination.

The silica made from a biomass material can be obtained by, for example, extracting a silicate using a sodium hydroxide solution from husk ash that is obtained by burning husks, subsequently, as in production of conventional wet silica, reacting the silicate with sulfuric acid to precipitate silicon dioxide, and then subjecting the precipitated silicon dioxide to filtration, water washing, drying, and grinding.

The silica recycled from a silica-containing product may be recovered from a silica-containing product including an electronic component such as a semiconductor, a tire, a drying agent, or a filtering material such as diatomite. Non-limiting examples of the recovering method include thermal decomposition and decomposition by electromagnetic waves. Preferred among these is silica recovered from an electronic component such as a semiconductor or a tire.

Since crystalline silica does not dissolve in water, silicic acid as a component thereof cannot be utilized. Crystallization of silica in husk ash can be suppressed by controlling the burning temperature and burning time (see JP 2009-2594 A, Akita Prefectural University Web Journal B/2019, vol.6, pp.216-222, for example).

Amorphous silica extracted from husks may be commercially available from Wilmar and other manufacturers.

The nitrogen adsorption specific surface area ($N_2SA$) of the silica is preferably 130 $m^2/g$ or more, more preferably 160 $m^2/g$ or more. If the $N_2SA$ is less than 130 $m^2/g$, the tire cannot obtain necessary rubber-reinforcing properties and therefore cannot obtain sufficient tensile strength and abrasion resistance.

The $N_2SA$ of the silica is preferably 300 $m^2/g$ or less, more preferably 260 $m^2/g$ or less. If the $N_2SA$ is more than 300 $m^2/g$, the processability deteriorates, and the processing is difficult.

The $N_2SA$ of the silica is measured by the BET method in accordance with ASTM D3037-93.

The average particle size of the silica is preferably 24 nm or less, more preferably 22 nm or less, still more preferably 20 nm or less, further preferably 17 nm or less, while it is preferably 6 nm or more, more preferably 9 nm or more, still more preferably 12 nm or more. When the average particle size is within the range indicated above, the advantageous effects tend to be better achieved.

Herein, the average particle size of the silica is determined by transmission electron microscopy (TEM). Specifically, silica particles are photographed using a transmission electron microscope to measure the particle sizes. The particle size of a particle having a spherical shape is the spherical diameter thereof; the particle size of a particle having

an acicular or rod shape is the minor axis thereof; and the particle size of a particle having an amorphous shape is an average of the particle sizes measured at the central portion. Then, the average of the particle sizes of 100 fine particles is defined as the average particle size.

The rubber composition may contain a filler other than the silica.

The filler other than the silica is not limited and may be a known material in the rubber field. Examples include inorganic fillers such as carbon black, calcium carbonate, talc, alumina, clay, aluminum hydroxide, aluminum oxide, and mica; water-soluble fillers; bio char; and hard-to-disperse fillers. Each of these may be used alone, or two or more of these may be used in combination. Carbon black is preferred among these.

Non-limiting examples of the carbon black include N134, N110, N220, N234, N219, N339, N330, N326, N351, N550, and N762. The raw material of the carbon black may be a biomass material such as lignin or a plant oil or may be a pyrolysis oil obtained by pyrolyzing waste tires. The carbon black may be produced through combustion, for example, by the furnace method, through hydrothermal carbonization (HTC), or through thermal decomposition of methane, for example, by thermal black method. Usable commercial products may be available from Asahi Carbon Co., Ltd., Cabot Japan K.K., Tokai Carbon Co., Ltd., Mitsubishi Chemical Corporation, Lion Corporation, NSCC Carbon Co., Ltd., Columbia Carbon, and other manufacturers. Each of these carbon black may be used alone, or two or more of these may be used in combination.

The $N_2SA$ of the carbon black is preferably 50 $m^2/g$ or more, more preferably 80 $m^2/g$ or more, still more preferably 110 $m^2/g$ or more, further preferably 114 $m^2/g$ or more. The $N_2SA$ is preferably 200 $m^2/g$ or less, more preferably 180 $m^2/g$ or less, still more preferably 160 $m^2/g$ or less. When the $N_2SA$ is within the range indicated above, the advantageous effects tend to be better achieved.

Herein, the $N_2SA$ of the carbon black is measured in accordance with JIS K 6217-2:2001.

The median particle size (median size, D50) of the water-soluble fillers is preferably 0.4 $\mu$m or more, more preferably 0.6 $\mu$m or more, still more preferably 1.0 $\mu$m or more. The upper limit is preferably 200 $\mu$m or less, more preferably 150 $\mu$m or less, still more preferably 50 $\mu$m or less, particularly preferably 20 $\mu$m or less. When the median particle size is within the range indicated above, the advantageous effects tend to be better achieved.

Herein, the median particle size of the water-soluble fillers may be measured by a laser diffraction method. The median particle size means the particle size corresponding to the 50th percentile of a mass-based particle size distribution obtained by a laser diffraction method.

The median particle size of the water-soluble fillers is measured by the following method.

[Measurement of median particle size (median size) of water-soluble filler]

The median particle size is measured by laser diffraction using SALD-2000J available from Shimadzu Corporation through the following operation.

<Measurement operation>

A water-soluble filler is dispersed in a solution mixture of a dispersion solvent (toluene) and a dispersant (a 10% by mass solution of sodium di(2-ethylhexyl) sulfosuccinate in toluene) at room temperature. The dispersion is stirred for five minutes under ultrasonic irradiation to prepare a test solution. The test solution is transferred to a batch cell. One minute later, the measurement is performed (refractive index: 1.70-0.20 i).

Examples of the water-soluble fillers include water-soluble inorganic salts and water-soluble organic substances. Each of these may be used alone, or two or more of these may be used in combination.

Examples of the water-soluble inorganic salts include metal sulfates such as magnesium sulfate, sodium sulfate, and potassium sulfate; metal chlorides such as potassium chloride, sodium chloride, calcium chloride, and magnesium chloride; metal hydroxides such as potassium hydroxide and sodium hydroxide; carbonates such as potassium carbonate, sodium carbonate, and calcium hydrogen carbonate; and phosphates such as sodium hydrogen phosphate and sodium dihydrogen phosphate.

Examples of the water-soluble organic substances include lignin derivatives and saccharides.

Suitable examples of the lignin derivatives include lignin sulfonic acid and lignosulfonates. The lignin derivatives may be prepared by either a sulfite pulping method or a kraft pulping method.

Examples of the lignosulfonates include alkali metal salts of lignin sulfonic acid, alkaline earth metal salts of lignin sulfonic acid, ammonium salts of lignin sulfonic acid, and alcohol amine salts of lignin sulfonic acid. Preferred among these are alkali metal salts (e.g., potassium salts or sodium salts) of lignin sulfonic acid and alkaline earth metal salts (e.g., calcium salts, magnesium salts, lithium salts, or barium salts) of lignin sulfonic acid.

The lignin derivatives preferably have a degree of sulfonation of 1.5 to 8.0/$OCH_3$. Such lignin derivatives include a lignin sulfonic acid and/or lignosulfonate in which lignin and/or a degradation product of lignin is at least partially substituted with a sulfo group (sulfone group). The sulfo group of the lignin sulfonic acid may be unionized, or the hydrogen atom of the

sulfo group may be replaced by an ion such as a metal ion. The degree of sulfonation is more preferably 3.0 to 6.0/$OCH_3$. When the degree of sulfonation is within the range indicated above, the advantageous effects tend to be more suitably achieved.

The degree of sulfonation of a lignin derivative particle (lignin derivative that forms the particle) refers to the ratio of introduced sulfo groups calculated by the following expression:

Degree of sulfonation (/$OCH_3$) = (S (mol) in sulfone groups in the lignin derivative)/(methoxyl groups (mol) in the lignin derivative).

The saccharides may have any number of carbon atoms and may be any of monosaccharide, oligosaccharide, or polysaccharide. Examples of the monosaccharide include trioses such as aldotriose and ketotriose; tetroses such as erythrose and threose; pentoses such as xylose and ribose; hexoses such as mannose, allose, altrose, and glucose; and heptoses such as sedoheptulose. Examples of the oligosaccharide include disaccharides such as sucrose and lactose; trisaccharides such as raffinose and melezitose; tetrasaccharides such as acarbose and stachyose; and higher oligosaccharides such as xylooligosaccharide and cellooligosaccharide. Examples of the polysaccharide include glycogen, starch (amylose, amylopectin), cellulose, hemicellulose, dextrin, and glucan.

The water-soluble filler is preferably a water-soluble inorganic salt, more preferably a metal sulfate, still more preferably a magnesium sulfate. The magnesium sulfate is preferably an anhydrous magnesium sulfate, a magnesium sulfate dihydrate, or a magnesium sulfate trihydrate, with an anhydrous magnesium sulfate being more preferred.

Presumably, the rubber composition containing a water-soluble filler tends to improve the overall performance in terms of fuel economy during driving in urban areas and lane change performance during high-speed driving.

Examples of the hard-to-disperse fillers include short fibers and gel-like compounds. Short fibers are preferred among these.

Examples of usable short fibers include organic short fibers and inorganic short fibers. Specific examples of the organic short fibers include nanocellulose such as cellulose nanofibers (CNF) and cellulose nanocrystals (CNC); chitin nanofibers; and biomass nanomaterials such as chitosan nanofibers. Specific examples of the inorganic short fibers include metal fibers and glass fibers. Usable commercial short fibers may be available from Nippon Paper Industries Co., Ltd., Sugino Machine Limited, and other manufacturers. Each of these may be used alone, or a mixture of two or more of these may be used. Organic short fibers are preferred, and nanocellulose is more preferred among these.

The particle size of the nanocellulose is preferably 10 nm or more, more preferably 20 nm or more, still more preferably 25 nm or more, particularly preferably 28 nm or more, while it is preferably 50 nm or less, more preferably 40 nm or less, still more preferably 35 nm or less, particularly preferably 32 nm or less. When the particle size is within the range indicated above, the advantageous effects tend to be better achieved.

Herein, the particle size of the nanocellulose refers to an average fiber diameter measured by image analysis using scanning electron micrographs, image analysis using transmission electron micrographs, image analysis using atomic force micrographs, X-ray scattering data analysis, the aperture impedance method (Coulter principle), or other methods. Herein, the average fiber diameter of the nanocellulose (cellulose fibers) typically refers to the average fiber diameter of the aggregates of the cellulose fibers formed by aggregation of cellulose molecules.

The amount of the filler (total amount of fillers such as silica and carbon black) per 100 parts by mass of the rubber component in the rubber composition is preferably 60 parts by mass or more, more preferably 65 parts by mass or more, still more preferably 80 parts by mass or more, further preferably 100 parts by mass or more, further preferably 130 parts by mass or more, while it is preferably 200 parts by mass or less, more preferably 180 parts by mass or less, still more preferably 160 parts by mass or less. When the amount is within the range indicated above, the advantageous effects tend to be better achieved.

In view of fuel economy, the amount is preferably 130 parts by mass or less, more preferably 100 parts by mass or less, still more preferably 65 parts by mass or less.

The amount of the silica in the rubber composition is preferably 5 parts by mass or more, more preferably 10 parts by mass or more, still more preferably 55 parts by mass or more, further preferably 90 parts by mass or more, further preferably 120 parts by mass or more. If the amount of the silica is less than 5 parts by mass, the silica fails to provide reinforcing properties necessary for the tire.

The amount of the silica is preferably 200 parts by mass or less, more preferably 180 parts by mass or less, still more preferably 150 parts by mass or less. If the amount of the silica is more than 200 parts by mass, the processability deteriorates, and the processing is difficult.

In view of fuel economy, the amount is preferably 120 parts by mass or less, more preferably 90 parts by mass or less, still more preferably 55 parts by mass or less.

The amount of carbon black, if present, in the rubber composition is preferably 3 parts by mass or more, more preferably 6 parts by mass or more, still more preferably 10 parts by mass or more, while it is preferably 30 parts by mass or

less, more preferably 20 parts by mass or less, still more preferably 15 parts by mass or less. When the amount is within the range indicated above, the advantageous effects tend to be better achieved.

In the rubber composition, a value of "amount of carbon black/amount of silica" is preferably 0.25 or less, more preferably 0.19 or less, still more preferably 0.15 or less, further preferably 0.12 or less, further preferably 0.10 or less, further preferably 0.09 or less, while it is preferably 0.04 or more, more preferably 0.06 or more, still more preferably 0.08 or more. When the value is within the range indicated above, the advantageous effects tend to be better achieved.

In the above relationship, the amounts of carbon black and silica each refer to the amount (unit: parts by mass) per 100 parts by mass of the rubber component.

The amount of water-soluble fillers, if present, in the rubber composition is preferably 1 part by mass or more, more preferably 5 parts by mass or more, still more preferably 10 parts by mass or more, while it is preferably 40 parts by mass or less, more preferably 30 parts by mass or less, still more preferably 20 parts by mass or less. When the amount is within the range indicated above, the advantageous effects tend to be better achieved.

To improve abrasion resistance, the amount is preferably 10 parts by mass or less, more preferably 5 parts by mass or less.

The amount of hard-to-disperse fillers, if present, in the rubber composition per 100 parts by mass of the rubber component is preferably 1 part by mass or more, more preferably 5 parts by mass or more. The amount is preferably 50 parts by mass or less, more preferably 30 parts by mass or less. When the amount is within the range indicated above, the advantageous effects tend to be better achieved.

The rubber composition contains an ionic bonding coupling agent.

The ionic bonding coupling agent may be any material including a portion capable of reacting with silica and a portion capable of forming an ionic bond. For example, the ionic bonding coupling agent is preferably a compound that includes a portion represented by $SiOR^1$ (wherein $R^1$ represents a monovalent organic group), which is a portion capable of reacting with a silanol group on the surface of silica, and an ionic functional group.

The ionic functional group may be any functional group containing anionic species or cationic species. Examples include anionic groups such as a sulfate ester group ($-OSO_3^-X^+$), a sulfonate group ($-SO_3^-X^+$), a phosphate ester group ($-OPO(O^-X^+)_2$), a phosphonate group ($-PO(O^-X^+)_2$), a carboxylate group ($-COO^-X^+$), and a boronate group ($-B(O^-X^+)_2$), wherein $X^+$ represents a cation; and cationic groups such as a quaternary ammonium group ($-(NR^{35}R^{36}R^{37+}Y^-)$, wherein $R^{35}$ to $R^{37}$ are described later, and $Y^-$ represents an anion. The ionic bonding coupling agent may have one type or two or more types of the ionic functional groups.

The cation represented by $X^+$ may be an organic ion or an inorganic ion. Non-limiting examples of the cation include a metal ion such as a lithium ion, a sodium ion, or a potassium ion, and an ammonium group. The anion represented by $Y^-$ may be an organic ion or an inorganic ion. Non-limiting examples of the anion include a chloride ion described later.

Of these, the ionic bonding coupling agent preferably includes at least one selected from the group consisting of a compound represented by the following formula (1), a hydrolysate of a compound represented by the following formula (1), and a hydrolysis condensate of a compound represented by the following formula (1).

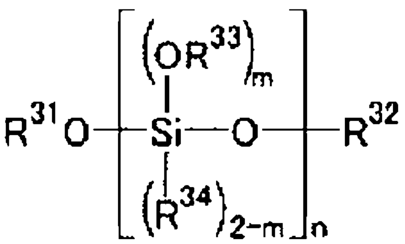
(1)

In the formula (1), $R^{31}$ and $R^{32}$ each independently represent a monovalent organic group; $R^{33}$ and $R^{34}$ each independently represent an organic group having a group selected from the group consisting of an alkyl group, a vinyl group, an epoxy group, a styryl group, a (meth)acryl group, an amino group, an isocyanurate group, an ureido group, a mercapto group, a sulfide group, a polyalkylene oxyalkyl group, a carboxyl group, a sulfate ester group, a sulfonate group, a phosphate ester group, a phosphonate group, a carboxylate group, a boronate group, and a quaternary ammonium group; at least one $R^{34}$ is an organic group having a group selected from the group consisting of a sulfate ester group, a sulfonate group, a phosphate ester group, a phosphonate group, a carboxylate group, a boronate group, and a quaternary ammonium group; each m independently represents an integer of 0 to 2; and n represents an integer.

Herein, the term "organic group" refers to a group having one or more carbon atoms.

The hydrolysate of a compound represented by the formula (1) refers to a compound obtained by converting at least one substituent on a silicon atom in the compound represented by the formula (1) into a silanol group through hydrolysis.

The hydrolysis condensate of a compound represented by the formula (1) refers to a compound obtained through

condensation of at least two compounds selected from the group consisting of compounds represented by the formula (1) and hydrolysates of compounds represented by the formula (1).

In the formula (1), m is preferably 1 or 2, more preferably 2.

In the formula (1), n is preferably an integer of 2 to 20.

The number of carbon atoms of the monovalent organic group as $R^{31}$ or $R^{32}$ in the formula (1) is preferably 1 to 6.

The C1-C6 organic group as $R^{31}$ or $R^{32}$ may be linear or may include a branch or a ring structure. Examples of the C1-C6 organic group include an alkyl group and an alkenyl group, with an alkyl group being preferred. Examples of the C1-C6 alkyl group include a methyl group, an ethyl group, a propyl group, an isopropyl group, an n-butyl group, a tert-butyl group, an n-pentyl group, an n-hexyl group, and a cyclohexyl group.

$R^{31}$ and $R^{32}$ in the formula (1) preferably each independently represent a C1-C6 alkyl group, more preferably a C1-C4 alky group, still more preferably a methyl group or an ethyl group, particularly preferably a methyl group.

Each $R^{33}$ in the formula (1) preferably independently represents a C1-C6 alkyl group, more preferably a C1-C4 alky group, still more preferably a methyl group or an ethyl group, particularly preferably a methyl group.

At least one $R^{34}$ in the formula (1) is preferably an organic group having a quaternary ammonium group.

Examples of the group having a quaternary ammonium group include groups represented by the following formula:

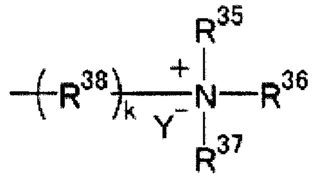

wherein $R^{35}$ to $R^{37}$ each independently represent a monovalent organic group; each $R^{38}$ independently represents a divalent organic group; $Y^-$ represents an anion; and k represents an integer.

Examples of the monovalent organic group as any of $R^{35}$ to $R^{37}$ include a monovalent hydrocarbon group. Examples of the monovalent hydrocarbon group include a C1-C18 alkyl group and a C2-C12 alkenyl group.

The number of carbon atoms of any of $R^{35}$ to $R^{37}$ is preferably 1 to 12, more preferably 1 to 7, still more preferably 1 to 5, particularly preferably 1 to 3.

The monovalent organic group as any of $R^{35}$ to $R^{37}$ is particularly preferably a methyl group or an ethyl group.

Examples of the divalent organic group as $R^{38}$ include a divalent hydrocarbon group. Examples of the divalent hydrocarbon group include a C1-C12 alkylene group and a C2-C12 alkenylene group.

The number of carbon atoms of $R^{38}$ is preferably 1 to 12, more preferably 1 to 7, still more preferably 1 to 5, particularly preferably 1 to 3.

The divalent organic group as $R^{38}$ is particularly preferably a methylene group or an ethylene group.

Preferably, k is 0 to 5, more preferably 0 to 3, still more preferably 0 or 1, particularly preferably 0.

Non-limiting examples of $Y^-$ include halide ions (e.g., chloride ion, bromide ion, iodide ion); carboxylate ions (e.g., formate ion, acetate ion, trifluoroacetate ion, lactate ion, propionate ion, benzoate ion, oxalate ion, succinate ion, stearate ion); methyl sulfate ions (e.g., alkyl sulfate ion); sulfonate ions (e.g., methanesulfonate ion, benzenesulfonate ion, trifluoromethanesulfonate ion, toluenesulfonate ion, naphthalenesulfonate ion, nitrobenzenesulfonate ion, dodecylbenzenesulfonate ion, ethanesulfonate ion); sulfonimide ions (e.g., bis(trifluoromethanesulfonate) imide ion); borate ions (e.g., tetrafluoroborate ion, tetraphenylborate ion, butyltriphenylborate ion); phosphate ions (e.g., hexafluorophosphate ion); antimonate ions (e.g., hexafluoroantimonate ion); arsenate ions (e.g., hexafluoroarsenate ion); perhalate ions (e.g., perchlorate ion, periodate ion); thiocyanate ions, and nitrate ions.

To better achieve the advantageous effects, a compound represented by the following formula (1-1) is desirable among the compound represented by the formula (1), the hydrolysate of a compound represented by the formula (1), and the hydrolysis condensate of a compound represented by the formula (1).

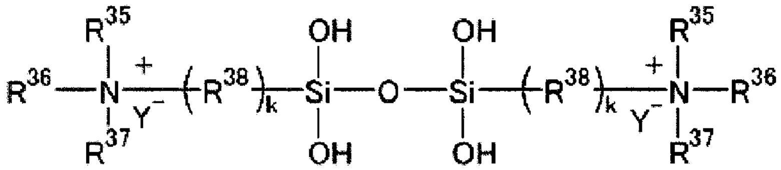

(1-1)

In the formula (1-1), $R^{35}$ to $R^{37}$ each independently represent any of the groups described above for the $R^{35}$ to $R^{37}$; each $R^{38}$ independently represents the ant of the groups described above for the $R^{38}$; each $Y^-$ independently represents any of the anions described above for the $Y^-$; and each k independently represents any of the integers

described above for the k.

In the formula (1-1), preferred examples of $R^{35}$ to $R^{37}$, $R^{38}$ $Y^-$, and k are also as described above.

The ionic bonding coupling agent may be a commercial product such as X-12-1126 or KBM-9418-40 available from Shin-Etsu Chemical Co., Ltd.

The total amount of the ionic bonding coupling agent per 100 parts by mass of the rubber component in the rubber composition is preferably 2 parts by mass or more, more preferably 5.5 parts by mass or more, still more preferably 9 parts by mass or more, further preferably 12 parts by mass or more, while it is preferably 30 parts by mass or less, more preferably 20 parts by mass or less, still more preferably 15 parts by mass or less. When the total amount is within the range indicated above, the advantageous effects tend to be better achieved.

In view of abrasion resistance, the total amount is preferably 12 parts by mass or less, more preferably 9 parts by mass or less, still more preferably 5.5 parts by mass or less.

The rubber composition which contains silica preferably further contains a silane coupling agent.

Any silane coupling agent may be used, and those known in the rubber field are usable. Examples include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyltetrasulfide, 2-triethoxysilylethyl-N,N-dimethylthiocarbamoyltetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z both available from Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane.

Usable commercial products may be available from Degussa, Momentive, Shin-Etsu Silicone, Tokyo Chemical Industry Co., Ltd., AZmax. Co., Dow Corning Toray Co., Ltd., and other manufacturers. Each of these may be used alone, or two or more of these may be used in combination.

The mercapto silane coupling agent may be a compound having a mercapto group protected by a protecting group, such as a compound represented by the following formula (S1), as well as a compound having a mercapto group.

Examples of particularly suitable mercapto silane coupling agents include a silane coupling agent represented by the following formula (S1) and a silane coupling agent that contains a linking unit A represented by the following formula (I) and a linking unit B represented by the following formula (II).

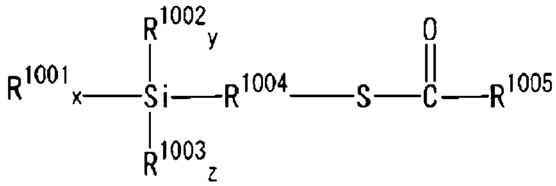

(S1)

In the formula (S1), $R^{1001}$ represents a monovalent group selected from -Cl, - Br, $-OR^{1006}$, $-O(O=)CR^{1006}$ , $-ON=CR^{1006}R^{1007}$, $-NR^{1006}R^{1007}$, or $-(OSiR^{1006}R^{1007})_h(OSiR^{1006}R^{1007}R^{1008})$ where $R^{1006}$, $R^{1007}$, and $R^{1008}$ may be the same as or different from each other and each represent a hydrogen atom or a C1-C18 monovalent hydrocarbon group, and h represents an average number of 1 to 4; $R^{1002}$ represents $R^{1001}$, a hydrogen atom, or a C1-C18 monovalent hydrocarbon group; $R^{1003}$ represents a $-[O(R^{1009}O)_j]-$ group where $R^{1009}$ represents a C1-C18 alkylene group, and j represents an integer of 1 to 4; $R^{1004}$ represents a C1-C18 divalent hydrocarbon group; $R^{1005}$ represents a C1-C18 monovalent hydrocarbon group; and x, y, and z are numbers satisfying the following relationships: $x + y + 2z = 3$, $0 \leq x \leq 3$, $0 \leq y \leq 2$, and $0 \leq z \leq 1$.

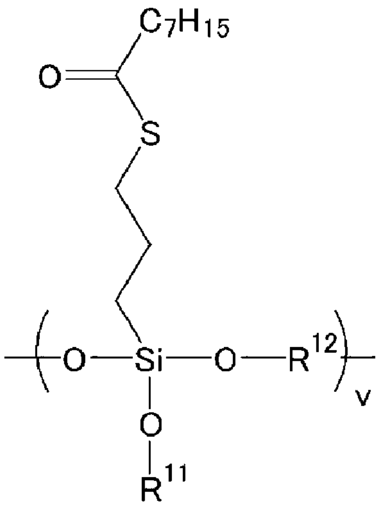

(I)

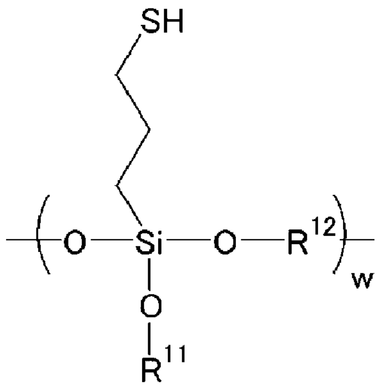

(II)

In the formulas (I) and (II), v represents an integer of 0 or more; w represents an integer of 1 or more; $R^{11}$ represents a hydrogen atom, a halogen atom, a branched or unbranched C1-C30 alkyl group, a branched or unbranched C2-C30 alkenyl group, a branched or unbranched C2-C30 alkynyl group, or the alkyl group in which a terminal hydrogen atom is replaced with a hydroxy or carboxyl group; $R^{12}$ represents a branched or unbranched C1-C30 alkylene group, a branched or unbranched C2-C30 alkenylene group, or a branched or unbranched C2-C30 alkynylene group; and $R^{11}$ and $R^{12}$ may together form a cyclic structure.

Preferably, $R^{1005}$, $R^{1006}$, $R^{1007}$, and $R^{1008}$ in the formula (S1) each independently represent a group selected from the group consisting of a C1-C18 alkyl group, a C1-C18 alkenyl group, a C1-C18 aryl group, and a C1-C18 aralkyl group, which may be linear, cyclic, or branched. When $R^{1002}$ is a C1-C18 monovalent hydrocarbon group, it is preferably a group selected from the group consisting of an alkyl group, an alkenyl group, an aryl group, and an aralkyl group, which may be linear, cyclic, or branched. $R^{1009}$ is preferably a linear, cyclic, or branched alkylene group, particularly preferably a linear alkylene group. Examples of $R^{1004}$ include a C1-C18 alkylene group, a C2-C18 alkenylene group, a C5-C18 cycloalkylene group, a C6-C18 cycloalkylalkylene group, a C6-C18 arylene group, and a C7-C18 aralkylene group. The alkylene group or the alkenylene group may be either linear or branched. The cycloalkylene group, the cycloalkylalkylene group, the arylene group, or the aralkylene group may have a functional group such as a lower alkyl group on the ring. $R^{1004}$ is preferably a C1-C6 alkylene group, particularly preferably a linear alkylene group such as a methylene group, an ethylene group, a trimethylene group, a tetramethylene group, a pentamethylene group, or a hexamethylene group.

Specific examples of $R^{1002}$, $R^{lO05}$, $R^{1006}$, $R^{1007}$, or $R^{1008}$ in the formula (S1) include a methyl group, an ethyl group, an n-propyl group, an isopropyl group, an n-butyl group, an isobutyl group, a sec-butyl group, a tert-butyl group, a pentyl group, a hexyl group, an octyl group, a decyl group, a dodecyl group, a cyclopentyl group, a cyclohexyl group, a vinyl group, a propenyl group, an allyl group, a hexenyl group, an octenyl group, a cyclopentenyl group, a cyclohexenyl group, a phenyl group, a tolyl group, a xylyl group, a naphthyl group, a benzyl group, a phenethyl group, and a naphthylmethyl group.

Examples of a linear alkylene group that may be used as $R^{1009}$ in the formula (S1) include a methylene group, an ethylene group, an n-propylene group, an n-butylene group, and a hexylene group. Examples of a branched alkylene group that may be used as $R^{1009}$ include an isopropylene group, an isobutylene group, and a 2-methylpropylene group.

Specific examples of the silane coupling agent represented by the formula (S1) include 3-hexanoylthiopropyltriethoxysilane, 3-octanoylthiopropyltriethoxysilane, 3-decanoylthiopropyltriethoxysilane, 3-lauroylthiopropyltriethoxysilane, 2-hexanoylthioethyltriethoxysilane, 2-octanoylthioethyltriethoxysilane, 2-decanoylthioethyltriethoxysilane, 2-lauroylthioethyltriethoxysilane, 3-hexanoylthiopropyltrimethoxysilane, 3-octanoylthiopropyltrimethoxysilane, 3-decanoylthiopropyltrimethoxysilane, 3-lauroylthiopropyltrimethoxysilane, 2-hexanoylthioethyltrimethoxysilane, 2-octanoylthioethyltrimethoxysilane, 2-decanoylthioethyltrimethoxysilane, and 2-lauroylthioethyltrimethoxysilane. Each of these may be used alone, or two or more of these may be used in combination. Particularly preferred among these is 3-octanoylthiopropyltriethoxysilane.

The linking unit A content of the silane coupling agent containing a linking unit A represented by the formula (I) and a linking unit B represented by the formula (II) is preferably 30 mol% or higher, more preferably 50 mol% or higher, while it is preferably 99 mol% or lower, more preferably 90 mol% or lower. The linking unit B content is preferably 1 mol% or higher, more preferably 5 mol% or higher, still more preferably 10 mol% or higher, while it is preferably 70 mol% or lower, more preferably 65 mol% or lower, still more preferably 55 mol% or lower. The total content of the linking units A and B is preferably 95 mol% or higher, more preferably 98 mol% or higher, particularly preferably 100 mol%.

The linking unit A content or the linking unit B content refers to the amount including the linking unit A or B present at the chain end of the silane coupling agent, if any. In the case where the linking unit A or the linking unit B is present at the chain end of the silane coupling agent, it may be in any configuration that forms a unit corresponding to the formula (I) or (II) representing the linking unit A or B.

With regard to $R^{11}$ in the formulas (I) and (II), examples of the halogen atom include chlorine, bromine, and fluorine; examples of the branched or unbranched C1-C30 alkyl group include a methyl group and an ethyl group; examples of the branched or unbranched C2-C30 alkenyl group include a vinyl group and a 1-propenyl group; and examples of the branched or unbranched C2-C30 alkynyl group include an ethynyl group and a propynyl group.

With regard to $R^{12}$ in the formulas (I) and (II), examples of the branched or unbranched C1-C30 alkylene group include an ethylene group and a propylene group; examples of the branched or unbranched C2-C30 alkenylene group include a vinylene group and a 1-propenylene group; and examples of the branched or unbranched C2-C30 alkynylene group include an ethynylene group and a propynylene group.

In the silane coupling agent containing a linking unit A represented by the formula (I) and a linking unit B represented by the formula (II), the total number of repetitions (v + w) as the sum of the number of repetitions (v) of the linking unit A and the number of repetitions (w) of the linking unit B is preferably in the range of 3 to 300.

The amount of the silane coupling agent per 100 parts by mass of the silica in the rubber composition is preferably 1 part by mass or more, more preferably 3 parts by mass or more, still more preferably 4 parts by mass or more, while it is preferably 16 parts by mass or less, more preferably 12 parts by mass or less, still more preferably 8 parts by mass or less, further preferably 5 parts by mass or less. When the amount is within the range indicated above, the advantageous effects tend to be better achieved.

The amount of the silane coupling agent per 100 parts by mass of the rubber having an amino group in the rubber composition is preferably 2 parts by mass or more, more preferably 4 parts by mass or more, still more preferably 6 parts by mass or more, further preferably 7 parts by mass or more, while it is preferably 20 parts by mass or less, more preferably 15 parts by mass or less, still more preferably 10 parts by mass or less, further preferably 8 parts by mass or less. When the amount is within the range indicated above, the advantageous effects tend to be better achieved.

The rubber composition preferably contains a softener.

Herein, the term "softener" refers to a material that imparts plasticity to rubber components and conceptually includes both softeners that are liquid under conditions of 1 atmosphere and 25°C and softeners that are solid under conditions of 1 atmosphere and 25°C. Examples of the softener include resins, oils, liquid rubbers (liquid polymers), and ester plasticizers. Oils and liquid rubbers are preferred among these.

These softeners may be derived from mineral resources such as petroleum or natural gas, biomass, or naphtha recycled from rubber products or non-rubber products. Usable softeners also include low molecular weight hydrocarbon components obtained by subjecting used tires or products containing various components to pyrolysis and extraction. Each of these softeners may be used alone, or two or more of these may be used in combination.

The term "resin" refers to a material that imparts plasticity to rubber components and conceptually includes both resins that are liquid under conditions of 1 atmosphere and 25°C and resins that are solid under conditions of 1 atmosphere and 25°C.

One resin may be used alone, or two or more resins may be used in combination.

Herein, resins and rubbers (rubber components or liquid rubbers) are different materials.

Non-limiting examples of usable resins include resins usually used in the tire industry, such as viscous resins including C5 resins, C9 resins, C5C9 resins, aromatic vinyl resins, dicyclopentadiene resins, coumarone resins, indene resins, terpene resins, rosin resins, and phenolic resins. Each of these resins may be used alone, or two or more of these may be used in combination.

The term "C5 resins" refers to resins obtained by polymerizing C5 fractions, and may include hydrogenated or modified products thereof. Examples of the C5 fractions include C4-C5 petroleum fractions, such as cyclopentadiene,

isoprene, pentane, isopentane, neopentane, pentene, and pentadiene. Each of these C5 resins may be used alone, or two or more of these may be used in combination.

The term "C9 resins" refers to resins obtained by polymerizing C9 fractions, and may include polymers obtained by polymerizing C9 fractions alone and copolymers obtained by copolymerizing C9 fractions and other components. Hydrogenated or modified products of such resins are also usable. Examples of the C9 fractions include C8-C10 petroleum fractions, such as vinyl toluene, alkyl styrene, coumarone, indene, methylindene, and dicyclopentadiene. Each of these C9 resins may be used alone, or two or more of these may be used in combination.

The term "C5C9 resins" refers to resins obtained by copolymerizing the C5 fractions and the C9 fractions, and may include hydrogenated or modified products thereof. Examples of the C5C9 petroleum resins include commercial products available from Tosoh Corporation, LUHUA, and other manufacturers. Each of these C5C9 resins may be used alone, or two or more of these may be used in combination.

The term "aromatic vinyl resins" refers to resins that contain an aromatic vinyl compound, such as styrene, α-methylstyrene, vinyl toluene, or p-chlorostyrene, as a monomer component with the highest content, and may include hydrogenated or modified products thereof. Preferred among aromatic vinyl resins are α-methylstyrene, styrene homopolymers, or copolymers of α-methylstyrene and styrene, with copolymers of α-methylstyrene and styrene being more preferred, because they are economical, easy to process, and excellent in heat generation properties. Examples of the aromatic vinyl resins include commercial products available from Kraton Corporation, Eastman Chemical Company, Mitsui Chemicals, Inc., and other manufacturers. Each of these aromatic vinyl resins may be used alone, or two or more of these may be used in combination.

The term "dicyclopentadiene resins" refers to resins that contain cyclopentadiene (CPD) or dicyclopentadiene (DCPD) as a monomer component, and may include hydrogenated or modified products thereof. Examples of the dicyclopentadiene resins include DCPD/C9 resins that contain dicyclopentadiene and C9 fractions as monomer components (the DCPD/C9 resins may include hydrogenated or modified products thereof). Preferred among these are DCPD/C9 resins that contain dicyclopentadiene and styrene as monomer components, and particularly preferred are DCPD/C9 resins that contain dicyclopentadiene, styrene, and indene as monomer components. Usable dicyclopentadiene resins also include commercial products available from ExxonMobil, ENEOS Corporation, Zeon Corporation, Maruzen Petrochemical Co., Ltd., and other manufacturers. Each of these dicyclopentadiene resins may be used alone, or two or more of these may be used in combination.

The term "coumarone resins" refers to resins that contain coumarone as a monomer component, and may include hydrogenated or modified products thereof. Examples of the coumarone resins include coumarone-indene resins that contain coumarone and indene as monomer components and coumarone-indene-styrene resins that contain coumarone, indene, and styrene as monomer components. Each of these coumarone resins may be used alone, or two or more of these may be used in combination.

The term "indene resins" refers to resins that contain indene as a monomer component, and may include hydrogenated or modified products thereof. Examples of the indene resins include coumarone-indene resins that contain coumarone and indene as monomer components and coumarone-indene-styrene resins that contain coumarone, indene, and styrene as monomer components. Each of these indene resins may be used alone, or two or more of these may be used in combination.

The term "terpene resins" refers to resins that contain a terpene compound, such as α-pinene, β-pinene, limonene, or dipentene, as a monomer component with the highest content, and may include hydrogenated or modified products thereof. Specific examples of the terpene resins include polyterpene resins containing only one or more of the terpene compounds as monomer components; aromatic modified terpene resins containing the terpene compound and an aromatic compound as monomer components; and terpene phenolic resins containing the terpene compound and a phenolic compound as monomer components. Examples of the aromatic compound as a monomer component of the aromatic modified terpene resins include styrene, α-methylstyrene, vinyl toluene, and divinyl toluene. Examples of the phenolic compound as a monomer component of the terpene phenolic resins include phenol, bisphenol A, cresol, and xylenol. Each of these terpene resins may be used alone, or two or more of these may be used in combination.

The term "rosin resins" refers to resins that contain a rosin acid compound, such as abietic acid, neoabietic acid, palustric acid, or isopimaric acid, and may include hydrogenated or modified products thereof. Non-limiting examples of the rosin resins include natural resin rosins and modified rosin resins obtained by modifying natural resin rosins by hydrogenation, disproportionation, dimerization, esterification, or other modification techniques. Each of these rosin resins may be used alone, or two or more of these may be used in combination.

The term "phenolic resins" refers to resins that contain a phenolic compound, such as phenol or cresol, as a monomer component with the highest content. Non-limiting examples of the phenolic resins include phenol formaldehyde resins, alkyl phenol formaldehyde resins, alkyl phenol acetylene resins, and oil-modified phenol formaldehyde resins. Each of these phenolic resins may be used alone, or two or more of these may be used in combination.

The resins may be modified resins (functionalized resins) in which a functional group has been introduced.

Modified resins can be produced by known methods, such as a slurry method or a metathesis method.

Specifically, a modified resin can be produced by reacting a polymer to constitute a polymer skeleton of the modified resin with a functional compound capable of introducing a functional group by a known method.

Non-limiting examples of the polymer to constitute a polymer skeleton include the C5 resins, aromatic resins, and terpene resins described above and other resins. Each of these may be used alone, or two or more of these may be used in combination. Of these, aromatic resins are preferred, $\alpha$-methylstyrene resins are more preferred, and styrene-$\alpha$-methylstyrene resins (copolymers of styrene and $\alpha$-methylstyrene) are still more preferred.

The functional group is preferably a functional group containing at least one element selected from the group consisting of oxygen, silicon, and nitrogen, more preferably a functional group containing silicon.

Usable commercial products of the resin include products available from Maruzen Petrochemical Co., Ltd. Sumitomo Bakelite Co. Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., ENEOS Corporation, Arakawa Chemical Industries, Ltd., Taoka Chemical Co., Ltd., and other manufacturers.

Examples of the oils include mineral oils, plant oils, and animal oils. In view of life cycle assessment, oils obtained by purifying waste oils used in rubber mixing machines or engines or waste cooking oils used in cooking establishments may be used. Plant oils are preferred among these.

Herein, mineral oils refer to oils derived from mineral resources such as petroleum or natural gas. Examples of the mineral oils include paraffinic oils (mineral oils), naphthenic oils, and aromatic oils. Specific examples of the mineral oils include mild extract solvates (MES), distillate aromatic extracts (DAE), treated distillate aromatic extracts (TDAE), treated residual aromatic extracts (TRAE), and residual aromatic extracts (RAE). For environmental protection, oils with a low polycyclic aromatic compound (PCA) content may be used. Examples of the oils with a low PCA content include MES, TDAE, and heavy naphthenic oils.

Herein, examples of the plant oils include linseed oil, rapeseed oil, safflower oil, soybean oil, corn oil, cotton seed oil, rice oil, tall oil, sesame oil, perilla oil, castor oil, tung oil, pine oil, pine tar oil, sunflower oil, coconut oil, palm oil, palm kernel oil, olive oil, camellia oil, jojoba oil, macadamia nut oil, peanut oil, grape seed oil, and Japan tallow. Examples of the plant oils also include refined oils (e.g., salad oil) produced by refining the above-mentioned oils, esterified oils produced by esterifying the above-mentioned oils, hardened oils produced by hydrogenation of the above-mentioned oils, thermally polymerized oils produced by thermal polymerization of the above-mentioned oils, oxidized polymerized oils produced by oxidizing the above-mentioned oils, and waste edible oils recovered from used edible oils or the like. The plant oils may be liquid or solid at 25°C. Each of these plant oils may be used alone, or two or more of these may be used in combination.

The plant oils according to the present embodiments each preferably contain acylglycerol and more preferably contain triacylglycerol. Herein, the term "acylglycerol" refers to a compound in which hydroxy groups of glycerol are ester-bonded to a fatty acid. Non-limiting examples of the acylglycerol include 1-monoacylglycerol, 2-monoacylglycerol, 1,2-diacylglycerol, 1,3-diacylglycerol, and triacylglycerol. Moreover, the acylglycerol may be a monomer, a dimer, or a trimer or higher multimer. A dimer or higher multimer acylglycerol may be obtained by thermal polymerization or oxidation polymerization, for example. The acylglycerol may be liquid or solid at 25°C.

Whether the rubber composition contains the acylglycerol may be examined by any method such as $^1$H-NMR analysis. For example, a rubber composition containing triacylglycerol is immersed in deuterium chloroform at 25°C for 24 hours. After removing the rubber composition, the $^1$H-NMR is measured at room temperature. Signals observed at around 5.26 ppm, around 4.28 ppm, and around 4.15 ppm, each relative to the signal of tetramethylsilane (TMS) taken as 0.00 ppm, are assumed as the signals of hydrogen atoms bound to carbon atoms adjacent to the oxygen atoms of ester groups. The term "around" in this paragraph refers to a range of $\pm$ 0.10 ppm.

The fatty acid is not limited and may be an unsaturated fatty acid or a saturated fatty acid. Examples of the unsaturated fatty acid include monounsaturated fatty acids such as oleic acid and polyunsaturated fatty acids such as linoleic acid and linolenic acid. Examples of the saturated fatty acid include butyric acid and lauric acid.

Of these fatty acids, fatty acids with few double bonds, specifically saturated fatty acids or monounsaturated fatty acids are desirable, and oleic acid is preferred. Examples of usable plant oils containing such fatty acids include plant oils containing saturated fatty acids or monounsaturated fatty acids and plant oils modified by transesterification or the like. Plants may be improved by breed improvement, genetic modification, genome editing, or other techniques to produce plant oils containing such fatty acids.

Usable commercial oils may be available from Idemitsu Kosan Co., Ltd., Sankyo Yuka Kogyo K.K., ENEOS Corporation, Olisoy, H&R, Hokoku Corporation, Fuji Kosan Co., Ltd., Nisshin Oillio Group, and other manufacturers.

The liquid rubber (liquid polymer) may be at least one diene-based (co)polymer selected from the group consisting of polybutadiene, polyisoprene, styrene, farnesene, and derivatives thereof. Specific examples include liquid diene-based polymers, such as liquid styrene-butadiene copolymers (liquid SBR), liquid butadiene polymers (liquid BR), liquid isoprene polymers (liquid IR), liquid styrene-isoprene copolymers (liquid SIR), liquid farnesene polymers, and liquid farnesene-butadiene copolymers. Liquid IR is preferred among these.

The liquid rubber may be modified by a functional group interactive with silica. Alternatively, the chain end(s) and/or the backbone of the liquid rubber may be modified by a functional group including at least one element selected from

the group consisting of oxygen, nitrogen, silicon, and phosphorus. The liquid rubber may be either hydrogenated or not hydrogenated.

The amount of the softener (total amount of softeners such as resins and liquid rubbers) per 100 parts by mass of the rubber component in the rubber composition is preferably 15 parts by mass or more, more preferably 20 parts by mass or more, still more preferably 30 parts by mass or more, further preferably 47 parts by mass or more, while it is preferably 80 parts by mass or less, more preferably 65 parts by mass or less, still more preferably 55 parts by mass or less. When the amount is within the range indicated above, the advantageous effects tend to be better achieved.

In view of abrasion resistance, the amount is preferably 47 parts by mass or less, more preferably 30 parts by mass or less, still more preferably 20 parts by mass or less, further preferably 15 parts by mass or less.

In the rubber composition, a value of "amount of softeners/amount of fillers" is preferably 0.10 or more, more preferably 0.20 or more, still more preferably 0.30 or more, further preferably 0.35 or more, while it is preferably 0.90 or less, more preferably 0.70 or less, still more preferably 0.50 or less, further preferably 0.40 or less. When the value is within the range indicated above, the advantageous effects tend to be better achieved.

In the above relationship, the amounts of softeners and fillers each refer to the amount (unit: parts by mass) per 100 parts by mass of the rubber component.

The amount of solid softeners that are solid under conditions of 1 atmosphere and 25°C, if present, in the rubber composition per 100 parts by mass of the rubber component is preferably 1 to 60 parts by mass.

The amount of liquid softeners that are liquid under conditions of 1 atmosphere and 25°C, if present, in the rubber composition per 100 parts by mass of the rubber component is preferably 15 parts by mass or more, more preferably 20 parts by mass or more, still more preferably 30 parts by mass or more, further preferably 47 parts by mass or more, while it is preferably 80 parts by mass or less, more preferably 65 parts by mass or less, still more preferably 55 parts by mass or less. When the amount is within the range indicated above, the advantageous effects tend to be better achieved.

Here, the amount of liquid softeners includes the amounts of oils in oil-extended rubbers and the amounts of liquid resins in resin-extended rubbers which have been extended with the liquid resins.

The amount of resins (total amount of resins that are solid under conditions of 1 atmosphere and 25°C and resins that are liquid under conditions of 1 atmosphere and 25°C), if present, in the rubber composition is preferably 1 to 50 parts by mass.

The amount of oils that are liquid under conditions of 1 atmosphere and 25°C, if present, in the rubber composition per 100 parts by mass of the rubber component is preferably 5 parts by mass or more, more preferably 10 parts by mass or more, still more preferably 20 parts by mass or more, while it is preferably 35 parts by mass or less, more preferably 25 parts by mass or less, still more preferably 15 parts by mass or less. When the amount is within the range indicated above, the advantageous effects tend to be better achieved.

Here, the amount of oils includes the amounts of oils in oil-extended rubbers.

The amount of liquid rubbers that are liquid under conditions of 1 atmosphere and 25°C, if present, in the rubber composition per 100 parts by mass of the rubber component is preferably 10 parts by mass or more, more preferably 20 parts by mass or more, still more preferably 27 parts by mass or more, while it is preferably 55 parts by mass or less, more preferably 45 parts by mass or less, still more preferably 35 parts by mass or less. When the amount is within the range indicated above, the advantageous effects tend to be better achieved.

The rubber composition may contain a fatty acid derivative.

Examples of the fatty acid derivative include fatty acid metal salts, amide esters, fatty acid esters, fatty acid amides, mixtures of fatty acid metal salts and amide esters, and mixtures of fatty acid metal salts and fatty acid amides. Each of these may be used alone, or two or more of these may be used in combination. Of these, the fatty acid derivative is preferably at least one selected from the group consisting of fatty acid metal salts, amide esters, and mixtures of fatty acid metal salts and amide esters or fatty acid amides, more preferably a fatty acid metal salt or a mixture of a fatty acid metal salt and a fatty acid amide, still more preferably a mixture of a fatty acid metal salt and a fatty acid amide.

Non-limiting examples of the fatty acid constituting the fatty acid metal salts include saturated or unsaturated fatty acids (preferably C6-C28 saturated or unsaturated fatty acids, more preferably C10-C25 saturated or unsaturated fatty acids, still more preferably C14-C20 saturated or unsaturated fatty acids), such as lauric acid, myristic acid, palmitic acid, stearic acid, oleic acid, linoleic acid, linolenic acid, arachidic acid, behenic acid, and nervonic acid. Each of these may be used alone, or mixtures of two or more of these may be used. Of these, saturated fatty acids are preferred, and C14-C20 saturated fatty acids are more preferred.

Examples of the metal constituting the fatty acid metal salts include alkali metals such as potassium and sodium, alkaline earth metals such as magnesium, calcium, and barium, zinc, nickel, and molybdenum. Each of these may be used alone, or two or more of these may be used in combination. Of these, zinc or calcium is preferred.

Examples of the amide esters include fatty acid amide esters containing the saturated or unsaturated fatty acids as constituent components. Each of these may be used alone, or two or more of these may be used in combination.

Examples of the fatty acid esters include fatty acid esters containing the saturated or unsaturated fatty acids as constituent components. Each of these may be used alone, or two or more of these may be used in combination.

The fatty acid amides may be either saturated fatty acid amides or unsaturated fatty acid amides. Each of these may be used alone, or two or more of these may be used in combination. Examples of the saturated fatty acid amides include N-(1-oxooctadecyl) sarcosinamide, stearic acid amide, and behenic acid amide. Examples of the unsaturated fatty acid amides include oleic acid amide and erucic acid amide.

Specific examples of the mixtures of fatty acid metal salts and amide esters include Aflux 16, which is a mixture of a fatty acid calcium salt and an amide ester, available from Rhein Chemie.

Specific examples of the mixtures of fatty acid metal salts and fatty acid amides include WB16, which is a mixture of a fatty acid calcium salt and a fatty acid amide, available from Struktol.

Examples of the fatty acid derivative include products available from Rhein Chemie, Struktol, and other manufactures.

The amount of the fatty acid derivative per 100 parts by mass of the rubber component is preferably 2 parts by mass or more, more preferably 4 parts by mass or more, still more preferably 6 parts by mass or more, while it is preferably 20 parts by mass or less, more preferably 15 parts by mass or less, still more preferably 10 parts by mass or less. When the amount is within the range indicated above, the advantageous effects tend to be better achieved.

The rubber composition may contain an antioxidant.

Non-limiting examples of the antioxidant include naphthylamine antioxidants such as phenyl-$\alpha$-naphthylamine; diphenylamine antioxidants such as octylated diphenylamine and 4,4'-bis($\alpha$,$\alpha$'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine (6PPD), N,N'-bis(1,4-dimethylpentyl)-p-phenylenediamine (77PD), N,N'-diphenyl-p-phenylenediamine (DPPD), N,N'-ditolyl-p-phenylenediamine (DTPD), N-isopropyl-N'-phenyl-p-phenylenediamine (IPPD), and N,N'-di-2-naphthyl-p-phenylenediamine (DNPD); quinoline antioxidants such as polymerized 2,2,4-trimethyl-1,2-dihydroquinoline; monophenolic antioxidants such as 2,6-di-t-butyl-4-methylphenol and styrenated phenol; and bis-, tris-, or polyphenolic antioxidants such as tetrakis[methylene-3-(3',5'-di-t-butyl-4'-hydroxyphenyl) propionate]methane. Preferred among these are p-phenylenediamine antioxidants and quinoline antioxidants, with N-(1,3-dimethylbutyl)-N'-phenyl-p-phenylenediamine or polymerized 2,2,4-trimethyl-1,2-dihydroquinoline being more preferred. Usable commercial products may be available from Seiko Chemical Co., Ltd., Sumitomo Chemical Co., Ltd., Ouchi Shinko Chemical Industrial Co., Ltd., Flexsys, and other manufacturers.

The amount of the antioxidant per 100 parts by mass of the rubber component in the rubber composition is preferably 2.0 parts by mass or more, more preferably 3.5 parts by mass or more, still more preferably 4.5 parts by mass or more, while it is preferably 12 parts by mass or less, more preferably 6 parts by mass or less. When the amount is within the range indicated above, the advantageous effects tend to be better achieved.

The rubber composition may contain stearic acid.

The amount of the stearic acid per 100 parts by mass of the rubber component in the rubber composition is preferably 1.0 parts by mass or more, more preferably 2.0 parts by mass or more, while it is preferably 10 parts by mass or less, more preferably 5 parts by mass or less. When the amount is within the range indicated above, the advantageous effects tend to be better achieved.

Here, conventionally known stearic acid may be used, including, for example, those available from NOF Corporation, Kao Corporation, FUJIFILM Wako Pure Chemical Corporation, Chiba Fatty Acid Co., Ltd., and other manufacturers.

The rubber composition may contain zinc oxide.

The amount of the zinc oxide per 100 parts by mass of the rubber component in the rubber composition is preferably 1.0 parts by mass or more, more preferably 2.0 parts by mass or more, while it is preferably 10 parts by mass or less, more preferably 5 parts by mass or less. When the amount is within the range indicated above, the advantageous effects tend to be better achieved.

Here, conventionally known zinc oxide may be used, including, for example, those available from Mitsui Mining & Smelting Co., Ltd., Toho Zinc Co., Ltd., HakusuiTech Co., Ltd., Seido Chemical Industry Co., Ltd., Sakai Chemical Industry Co., Ltd., and other manufacturers.

The rubber composition may contain sulfur.

The amount of the sulfur per 100 parts by mass of the rubber component in the rubber composition is preferably 1.0 parts by mass or more, more preferably 1.7 parts by mass or more, still more preferably 2.0 parts by mass or more, while it is preferably 5.0 parts by mass or less, more preferably 4.0 parts by mass or less, still more preferably 3.0 parts by mass or less. When the amount is within the range indicated above, the advantageous effects tend to be better achieved.

Examples of sulfur include those commonly used in the rubber industry, such as powdered sulfur, precipitated sulfur, colloidal sulfur, insoluble sulfur, highly dispersible sulfur, and soluble sulfur. Usable commercial products may be available from Tsurumi Chemical Industry Co., Ltd., Karuizawa sulfur Co., Ltd., Shikoku Chemicals Corporation, Flexsys, Nippon Kanryu Industry Co., Ltd., Hosoi Chemical Industry Co., Ltd, and other manufacturers. Each of these may be used alone, or two or more of these may be used in combination.

The rubber composition may contain a vulcanization accelerator.

The amount of the vulcanization accelerator per 100 parts by mass of the rubber component in the rubber composition is preferably 1.5 parts by mass or more, more preferably 3.0 parts by mass or more, still more preferably 4.4 parts by mass or more, further preferably 4.5 parts by mass or more, further preferably 4.8 parts by mass or more, while it is preferably 16 parts by mass or less, more preferably 8 parts by mass or less, still more preferably 5 parts by mass or less. When the amount is within the range indicated above, the advantageous effects tend to be better achieved.

Any type of vulcanization accelerators may be used, including those generally used. Examples of the vulcanization accelerator include benzothiazole vulcanization accelerators such as 2-mercaptobenzothiazole, di-2-benzothiazolyl disulfide, and N-cyclohexyl-2-benzothiazylsulfenamide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazole sulfenamide, N-t-butyl-2-benzothiazolylsulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. Usable commercial products may be available from Sumitomo Chemical Co., Ltd., Ouchi Shinko Chemical Industrial Co., Ltd., and other manufacturers. Each of these may be used alone, or two or more of these may be used in combination. Of these, sulfenamide vulcanization accelerators, guanidine vulcanization accelerators, and benzothiazole vulcanization accelerators are preferred.

In addition to the above-described components, the rubber composition may appropriately contain agents commonly used in the tire industry such as releasing agents or other materials.

Herein, various materials containing carbon atoms (for example, rubbers, oils, resins, vulcanization accelerators, antioxidants, surfactants) may be derived from carbon dioxide in the air. Such materials may be obtained from carbon dioxide by directly converting carbon dioxide or by synthesizing methane from carbon dioxide through methanation and then converting the methane.

The rubber composition can be produced by, for example, kneading the above-described components using a rubber kneading machine such as an open roll mill or a Banbury mixer, and vulcanizing the kneaded mixture.

The kneading conditions are as follows. In a base kneading step of kneading additives other than cross-linking agents (vulcanizing agents) and vulcanization accelerators, the kneading temperature is preferably 100°C or higher, more preferably 120°C or higher, while it is preferably 180°C or lower, more preferably 170°C or lower. In a final kneading step of kneading vulcanizing agents and vulcanization accelerators, the kneading temperature is preferably 80°C or higher, while it is preferably 120°C or lower, more preferably 110°C or lower. The composition obtained after kneading vulcanizing agents and vulcanization accelerators is usually vulcanized by press vulcanization, for example. The vulcanization temperature is preferably 140°C or higher, more preferably 150°C or higher, while it is preferably 190°C or lower, more preferably 185°C or lower.

A tire including a tread that includes the rubber composition is produced using the rubber composition by a usual method. Specifically, the rubber composition containing necessary additives before vulcanization is extruded and processed into the shape of a tread and then molded on a tire building machine by a usual method. The molded tread is assembled with other tire components to produce an unvulcanized tire. Then, the unvulcanized tire is heated and pressurized in a vulcanizer, whereby a tire can be produced.

The tread may have either a monolayer structure or a multilayer structure. In the case of a tread with a multilayer structure, at least one layer includes the rubber composition. Preferably, at least the outermost layer in the tire radial direction includes the rubber composition.

Non-limiting examples of the tire include pneumatic tires, solid tires, and airless tires. Pneumatic tires are preferred among these.

The tire is usable as a passenger car tire, a large passenger car tire, a large SUV tire, a heavy duty tire such as a truck or bus tire, a light truck tire, a motorcycle tire, a racing tire, a winter tire (studless tire, snow tire, studded tire), an all-season tire, a run-flat tire, an aircraft tire, a mining vehicle tire, or other tires. The tire is preferably used as a passenger car tire.

In the tire, a circumferential groove in the tread has a maximum depth D of preferably 6 mm or more, more preferably 10 mm or more, still more preferably 15 mm or more. The upper limit is preferably 30 mm or less, more preferably 25 mm or less, still more preferably 20 mm or less. When the maximum depth D is within the range indicated above, the advantageous effects tend to be better achieved.

Herein, the maximum depth D of the circumferential groove refers to a distance measured along the normal of a plane extended from a ground contact face defining the outermost surface of the tread. The maximum depth is a distance from the plane extended from the ground contact face to the deepest bottom, and it is the longest distance among the groove depths of all the circumferential grooves provided.

The tire satisfies the relationship: $D \times S > 300$ wherein D represents a maximum depth (mm) of the circumferential groove, and S represents an amount (parts by mass) of the silica per 100 parts by mass of the rubber component.

The value of "$D \times S$" is preferably 330 or more, more preferably 600 or more, still more preferably 900 or more, further preferably 1200 or more, further preferably 1500 or more, further preferably 1800 or more, while it is preferably 5000

or less, more preferably 4000 or less, still more preferably 3000 or less. When the value is within the range indicated above, the advantageous effects tend to be better achieved.

In view of abrasion resistance, the value is preferably 1800 or less, more preferably 900 or less, still more preferably 330 or less.

In the tire, the maximum thickness T of the tread is preferably 3.0 mm or more, more preferably 5.0 mm or more, still more preferably 7.0 mm or more, further preferably 9.0 mm or more. The upper limit is preferably 20.0 mm or less, more preferably 18.0 mm or less, still more preferably 16.0 mm or less, particularly preferably 14.0 mm or less. When the maximum thickness T is within the range indicated above, the advantageous effect tends to be better achieved.

Herein, the maximum thickness T of the tread refers to a distance measured along the normal of a plane extended from a ground contact face defining the outermost surface of the tread. The maximum thickness T is the longest distance among the distances from the plane extended from the ground contact face to the upper face of a carcass in the tire radial direction.

FIG. 1 shows a meridional cross-sectional view of a part of a pneumatic tire 1 according to an embodiment of the present invention. The tire of the present invention is not limited to the embodiment below.

In FIG. 1, the vertical direction corresponds to the radial direction of the tire (hereinafter, also referred to simply as radial direction), the horizontal direction corresponds to the axial direction of the tire (hereinafter, also referred to simply as axial direction), and the direction perpendicular to the drawing plane corresponds to the circumferential direction of the tire (hereinafter, also referred to simply as circumferential direction). The tire 1 has a shape that is horizontally substantially symmetrical about the center line CL in FIG. 1. The center line CL is also referred to as a tread center line and defines the equator EQ of the tire 1.

The tire 1 includes a tread 2, a sidewall 3, a bead 4, a carcass 5, and a belt 6. The tire 1 is a tubeless tire.

The tread 2 includes a tread face 7. The tread face 7 has a radially outwardly convex shape in a cross-section taken in the meridional direction of the tire 1. The tread face 7 will contact the road surface. The tread face 7 has a plurality of circumferentially extending grooves 8 carved therein. The grooves 8 define a tread pattern. The external part of the tread 2 in the tire axial direction (tire width direction) is referred to as a shoulder portion 15. The sidewall 3 extends substantially inwardly in the radial direction from the end of the tread 2. The sidewall 3 includes a cross-linked rubber or other materials.

As shown in FIG. 1, the bead 4 is located radially substantially inward from the sidewall 3. The bead 4 includes a core 10 and an apex 11 radially outwardly extending from the core 10. The core 10 has a ring shape along the circumferential direction of the tire. The core 10 consists of a wound inextensible wire. Typically, a steel wire is used in the core 10. The apex 11 is radially outwardly tapered. The apex 11 includes a very hard cross-linked rubber or other materials.

In the present embodiment, the carcass 5 consists of a carcass ply 12. The carcass ply 12 extends between the opposite beads 4 along the inner sides of the tread 2 and the sidewalls 3. The carcass ply 12 is folded around the core 10 from the inside to the outside in the axial direction of the tire. Though not shown, the carcass ply 12 consists of a large number of parallel cords and a topping rubber. The absolute value of the angle of each cord relative to the equator EQ (CL) is usually 70° to 90°. In other words, the carcass 5 has a radial structure.

In the present embodiment, the belt 6 is located radially outward of the carcass 5. The belt 6 is stacked on the carcass 5. The belt 6 reinforces the carcass 5. The belt 6 may include an inner layer belt 13 and an outer layer belt 14. In the present embodiment, the widths of the belts 13 and 14 are different from each other.

Though not shown, the inner layer belt 13 and the outer layer belt 14 each usually consist of a large number of parallel cords and a topping rubber. Each cord is desirably inclined to the equator EQ. Desirably, the cords of the inner layer belt 13 are inclined in a direction opposite to that of the cords of the outer layer belt.

Though not shown, an embodiment may be used in which a band is stacked on the outer side of the belt 6 in the radial direction of the tire. The width of the band is larger than that of the belt 6. The band may consist of cords and a topping rubber. The cords are spirally wound. The belt is constrained by the cords, so that the belt 6 is inhibited from lifting. The cords desirably consist of organic fibers. Preferred examples of the organic fibers include nylon fibers, polyester fibers, rayon fibers, polyethylene naphthalate fibers, and aramid fibers.

Though not shown, an embodiment may be used in which an edge band is provided radially outward of the belt 6 and near the widthwise end (edge portion) of the belt 6. Like the band, the edge band may consist of cords and a topping rubber. An exemplary edge band may be stacked on the upper face of a step 20 of the wider inner layer belt 13. In an exemplary embodiment, the cords of the edge band are inclined in the same direction as the cords of the narrower outer layer belt 14 and are biased relative to the cords of the wider inner layer belt 13.

Though not shown, an embodiment may be used in which a cushion rubber layer is stacked on the carcass 5 near the widthwise end of the belt 6. In an exemplary embodiment, the cushion layer consists of a soft cross-linked rubber. The cushion layer absorbs the stress on the belt edge.

FIG. 2 shows a cross-sectional view of the tread 2 of the tire 1 cut along a plane including the tire axis.

The tread 2 of the tire 1 is provided with circumferential grooves 8. In the tire 1, the maximum depth D of the circumferential grooves 8 refers to a distance in the normal direction from a plane extended from a ground contact face

defining the tread face 7 to the deepest bottom, and it is the depth of the deepest one of the multiple circumferential grooves 8.

In the tire 1, the maximum thickness T of the tread 2 refers to the longest distance among the dimensions in the tire radial direction from a plane extended from a ground contact face defining the tread face 7 to the upper face of the carcass 5.

EXAMPLES

The present invention will be described below with reference to examples. The scope of the present invention is not limited to the examples.

Chemicals used in examples and comparative examples are listed below.

(Rubber components)

NR: TSR20
Amino group-modified SBR: HPR850 (styrene content: 27.5% by mass, vinyl content: 59% by mass, Tg: -24°C) available from ENEOS Materials Trading Co., Ltd.
BR: Nipol BR1220 (vinyl content: 1% by mass, cis content: 97% by mass or higher) available from Zeon Corporation

(Chemicals other than rubber components)

Carbon black: DIABLACK I (N220, $N_2SA$: 114 $m^2/g$, DBP: 114 ml/100 g) available from Mitsubishi Chemical Corporation
Silica: Ultrasil VN3 (average particle size: 17 nm) available from Evonik Degussa
Ionic bonding coupling agent: X-12-1126 (quaternary ammonium salt) available from Shin-Etsu Chemical Co., Ltd.
Silane coupling agent: Si266 (bis(3-triethoxysilylpropyl)disulfide) available from Evonik
Oil: Process X-140 available from ENEOS Corporation
Liquid rubber: LIR-410 (liquid IR, Mw: 30000) available from Kuraray
Wax: SUNNOC N available from Ouchi Shinko Chemical Industrial Co., Ltd.
Antioxidant 1: Nocrac 6C (N-(1,3dimethylbutyl)-N'-phenyl-p-phenylenediamine) available from Ouchi Shinko Chemical Industrial Co., Ltd.
Antioxidant 2: Nocrac RD (poly(2,2,4-trimethyl-1,2-dihydroquinoline)) available from Ouchi Shinko Chemical Industrial Co., Ltd.
Stearic acid: TSUBAKI available from NOF Corporation
Zinc oxide: zinc oxide #1 available from Mitsui Mining & Smelting Co., Ltd.
Sulfur: powdered sulfur available from Karuizawa Smelter (Karuizawa Seirenjo)
Vulcanization accelerator 1: NOCCELER CZ (N-cyclohexyl-2-benzothiazolylsulfenamide) available from Ouchi Shinko Chemical Industrial Co., Ltd.
Vulcanization accelerator 2: NOCCELER D (N,N'-diphenylguanidine) available from Ouchi Shinko Chemical Industrial Co., Ltd.

(Examples and Comparative Examples)

According to the formulation shown in Table 1, the chemicals other than the sulfur and the vulcanization accelerators are kneaded in a 16-L Banbury mixer (Kobe Steel, Ltd.) at 160°C for four minutes to obtain a kneaded mixture.

Next, the kneaded mixture is kneaded with the sulfur and vulcanization accelerators using an open roll mill at 80°C for four minutes to obtain an unvulcanized polymer composition.

The unvulcanized polymer composition is formed into the shape of a tread and assembled with other tire components on a tire building machine to build an unvulcanized tire. The unvulcanized tire is vulcanized at 170°C for 12 minutes, whereby a test tire (specification: Table 1, size: 195/65R15) is produced.

The test tire produced as described above is examined. Table 1 shows the evaluation results determined by the method below.

The evaluation reference for calculating the index in the evaluation method below is as follows.

Table 1: Comparative Example 1

<Wet grip performance>

The test tire is mounted on every wheel of a car. Twenty test drivers independently drive the car 10 rounds on a course with a wet road surface, and the drivers rate the braking performance in a wet road surface region on a scale of one to five and determine the rating. A higher rating indicates better braking performance. The sum of the ratings of the twenty drivers is calculated and expressed as an index relative to the evaluation reference taken as 100. A higher index indicates better wet grip performance.

[Table 1]

| | | Example | | | | Comparative Example | | |
|---|---|---|---|---|---|---|---|---|
| | | 1 | 2 | 3 | 4 | 1 | 2 | 3 |
| Formulation (parts by mass) | NR | 10 | 10 | 10 | 10 | 10 | 10 | 10 |
| | Amino group-modified SBR | 70 | 70 | 70 | 70 | 70 | 70 | 70 |
| | BR | 20 | 20 | 20 | 20 | 20 | 20 | 20 |
| | Carbon black | 10 | 10 | 10 | 10 | 10 | 10 | 10 |
| | Silica | 90 | 90 | 55 | 120 | 90 | 50 | 50 |
| | Ionic bonding coupling agent | 9 | 9 | 5.5 | 12 | 0 | 5 | 0 |
| | Silane coupling agent | 3 | 3 | 1.8 | 5 | 9 | 1.7 | 5 |
| | Oil | 20 | 10 | 5 | 20 | 20 | 10 | 10 |
| | Liquid rubber | 0 | 20 | 10 | 27 | 0 | 0 | 0 |
| | Wax | 2 | 2 | 2 | 2 | 2 | 2 | 2 |
| | Antioxidant 1 | 2 | 2 | 2 | 3 | 2 | 2 | 2 |
| | Antioxidant 2 | 1.5 | 1.5 | 1.5 | 1.5 | 2 | 1.5 | 1.5 |
| | Stearic acid | 2 | 2 | 2 | 2 | 2 | 2 | 2 |
| | Zinc oxide | 2 | 2 | 2 | 2 | 2 | 2 | 2 |
| | Sulfur | 1.7 | 1.7 | 1.7 | 2 | 1.7 | 1.7 | 1.7 |
| | Vulcanization accelerator 1 | 2 | 2 | 2 | 2.2 | 2 | 2 | 2 |
| | Vulcanization accelerator 2 | 2.4 | 2.4 | 2.4 | 2.6 | 2.4 | 2.4 | 2.4 |
| Specification | Largest depth D (mm) of circumferential groove | 10 | 10 | 6 | 15 | 10 | 5 | 5 |
| | Amount S (parts by mass) of silica | 90 | 90 | 55 | 120 | 90 | 50 | 50 |
| | D × S | 900 | 900 | 330 | 1800 | 900 | 250 | 250 |
| Performance | Wet grip performance | 110 | 119 | 105 | 131 | 100 | 92 | 88 |

REFERENCE SIGNS LIST

1 tire
2 tread
3 sidewall

4 bead
5 carcass
6 belt
7 tread face
8 groove
10 core
11 apex
12 carcass ply
13 inner layer belt
14 outer layer belt
15 shoulder portion
17 crown center (tread center line CL, equator EQ of tire 1)
20 step
D maximum depth of circumferential groove
T maximum thickness of tread

## Claims

1. A tire, comprising a tread including a rubber composition,

   the tread having a circumferential groove,
   the rubber composition containing a rubber component including a rubber having an amino group; a filler including silica; and an ionic bonding coupling agent,
   the tire satisfying the relationship: $D \times S > 300$

   wherein D represents a maximum depth (mm) of the circumferential groove, and S represents an amount (parts by mass) of the silica per 100 parts by mass of the rubber component.

2. The tire according to claim 1,
   wherein the rubber having an amino group is styrene-butadiene rubber.

3. The tire according to claim 1 or 2,
   wherein the rubber component includes polybutadiene rubber.

4. The tire according to any one of claims 1 to 3,
   wherein the rubber component includes an isoprene-based rubber.

5. The tire according to any one of claims 1 to 4,
   wherein the amount of the silica per 100 parts by mass of the rubber component is 90 parts by mass or more and 150 parts by mass or less.

6. The tire according to any one of claims 1 to 5,
   wherein the rubber composition contains a silane coupling agent.

7. The tire according to claim 6,
   wherein an amount of the silane coupling agent per 100 parts by mass of the rubber having an amino group is 4 parts by mass or more and 10 parts by mass or less.

8. The tire according to any one of claims 1 to 7,
   wherein the filler includes carbon black.

9. The tire according to claim 8,
   wherein an amount of the carbon black per 100 parts by mass of the rubber component is 6 parts by mass or more and 15 parts by mass or less.

10. The tire according to claim 8 or 9,
    wherein a value of "amount of the carbon black/amount of the silica" is 0.06 or more and 0.15 or less.

**11.** The tire according to any one of claims 1 to 10, wherein the rubber composition contains a softener.

**12.** The tire according to claim 11, wherein a value of "amount of the softener/amount of the filler" is 0.20 or more and 0.70 or less.

**13.** The tire according to claim 11 or 12, wherein the softener includes a liquid polymer.

**14.** The tire according to any one of claims 1 to 13, wherein the maximum depth of the circumferential groove is 6 mm or more and 20 mm or less.

**15.** The tire according to any one of claims 1 to 14, wherein a value of "D × S" is 900 or more and 3000 or less.

FIG.1

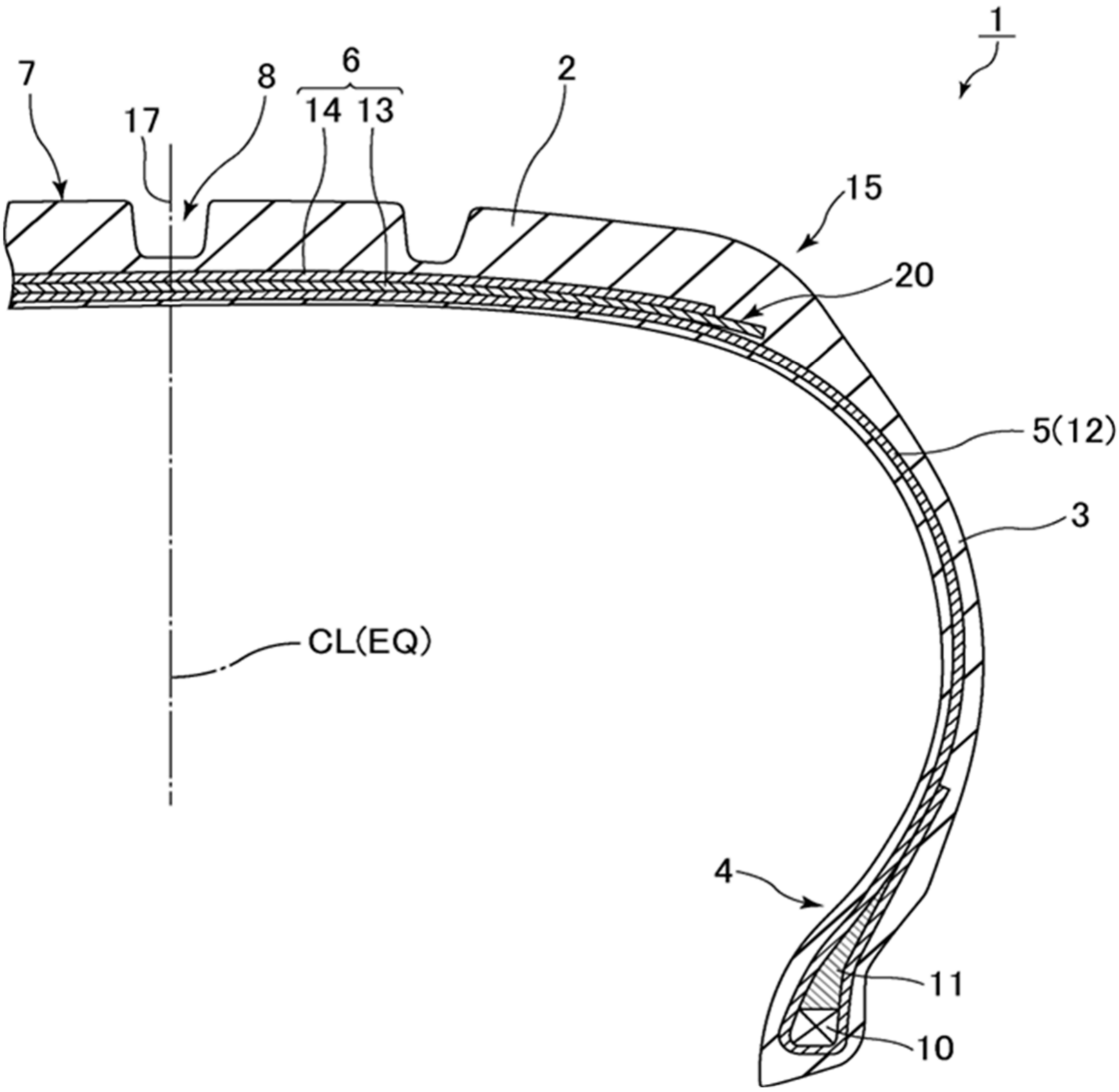

FIG.2

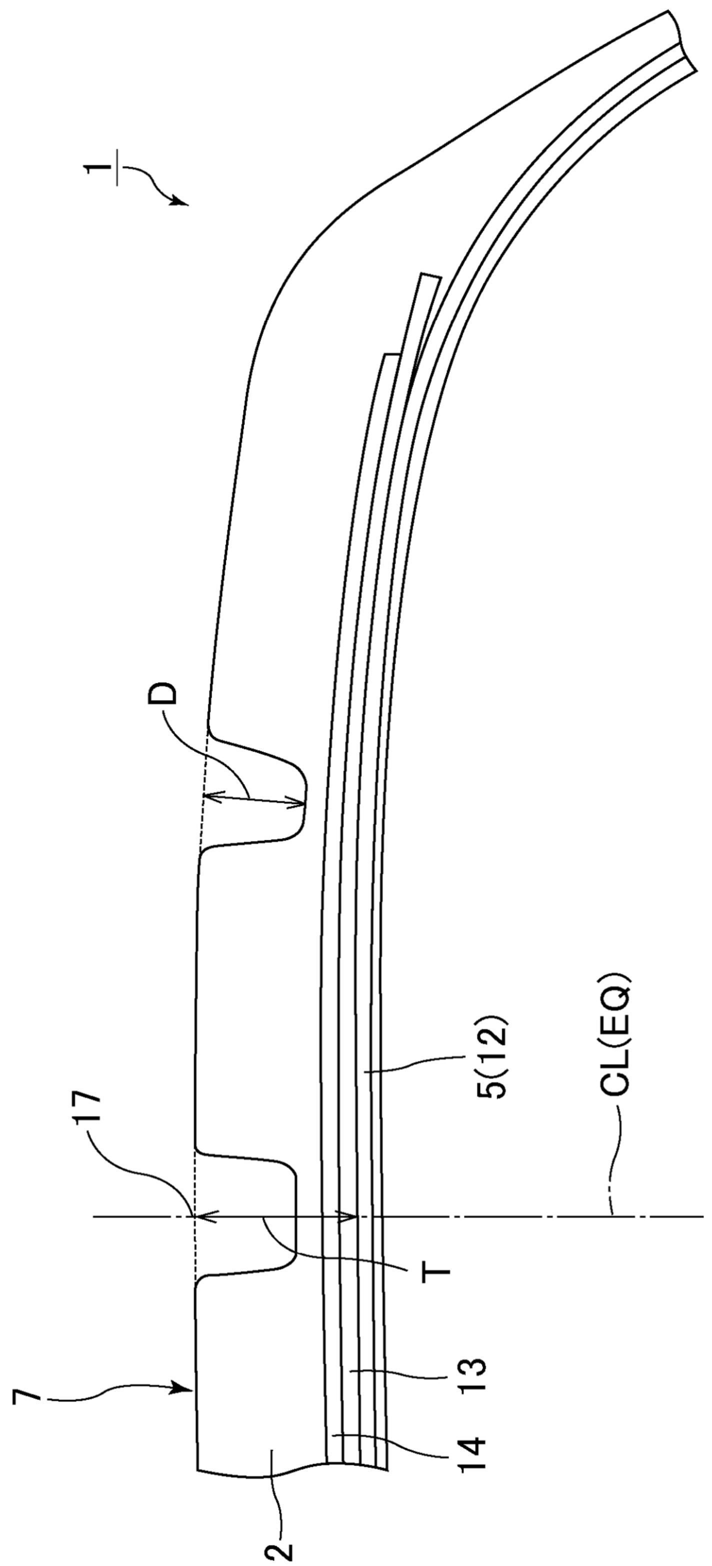

Europäisches Patentamt
European Patent Office
Office européen des brevets

# EUROPEAN SEARCH REPORT

Application Number
EP 25 21 9123

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | DE 11 2023 001252 T5 (SUMITOMO RUBBER IND [JP]) 19 December 2024 (2024-12-19)<br>* paragraphs [0003], [0054] - [0060], [0125] - [0155]; claims; examples 1-4,6-11,13; table 1 *<br>----- | 1-15<br>1-15 | INV.<br>B60C1/00<br>C08L15/00 |
| Y | JP 2023 149903 A (SUMITOMO RUBBER IND) 16 October 2023 (2023-10-16)<br>* paragraphs [0001] - [0003]; claims; examples 1-2,4-8; table 1 *<br>----- | 1-15 | |
| A | JP 2023 079167 A (SUMITOMO RUBBER IND) 7 June 2023 (2023-06-07)<br>* the whole document *<br>----- | 1-15 | |
| | | | TECHNICAL FIELDS SEARCHED (IPC) |
| | | | C08L<br>B60C |

The present search report has been drawn up for all claims

2

| Place of search | Date of completion of the search | Examiner |
|---|---|---|
| Munich | 8 May 2026 | Reisbeck, Felix |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO. EP 25 21 9123

This annex lists the patent family members relating to the patent documents cited in the above-mentioned European search report.
The members are as contained in the European Patent Office EDP file on
The European Patent Office is in no way liable for these particulars which are merely given for the purpose of information.

08-05-2026

| Patent document cited in search report | Publication date | Patent family member(s) | Publication date |
|---|---|---|---|
| DE 112023001252 T5 | 19-12-2024 | CN 118043208 A | 14-05-2024 |
| | | DE 112023001252 T5 | 19-12-2024 |
| | | JP 7800217 B2 | 16-01-2026 |
| | | JP 2023130061 A | 20-09-2023 |
| | | US 2025206067 A1 | 26-06-2025 |
| | | WO 2023171323 A1 | 14-09-2023 |
| JP 2023149903 A | 16-10-2023 | NONE | |
| JP 2023079167 A | 07-06-2023 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2013544936 T
- JP 2009002594 A


### Non-patent literature cited in the description


- *Akita Prefectural University Web Journal*, 2019, vol. 6, 216-222